# EUROPÄISCHE PATENTSCHRIFT

(11) **EP 3 135 980 B1**
(45) Veröffentlichungstag und Bekanntmachung des Hinweises auf die Patenterteilung: **02.10.2019**
(21) Anmeldenummer: 16183397.5
(22) Anmeldetag: 09.08.2016
(51) Int. Cl.: F16M 11/16, F16M 13/00, F16M 13/02, F16B 9/02, F16B 39/32

(54) **VERSCHLUSSVORRICHTUNG ZUM BEFESTIGEN EINES GEGENSTANDS AN EINEM TRÄGERELEMENT UND HALTERUNG FÜR DIE BEFESTIGUNG EINES GEGENSTANDS AN EINEM TRÄGERELEMENT**
CLOSURE DEVICE FOR FIXING AN OBJECT TO A SUPPORTING ELEMENT AND MOUNTING FOR FASTENING AN OBJECT TO A SUPPORTING ELEMENT
DISPOSITIF DE FERMETURE DESTINE A FIXER UN OBJET SUR UN ELEMENT PORTEUR ET SUPPORT DE FIXATION D'UN OBJET SUR UN ELEMENT PORTEUR

(30) Priorität: 25.08.2015 DE 102015216242
(43) Veröffentlichungstag der Anmeldung: 01.03.2017
(73) Patentinhaber: Fidlock GmbH, 30175 Hannover (DE)
(72) Erfinder: FIEDLER, Joachim, 30175 Hannover (DE); RICHTER, Friedemann, 30453 Hannover (DE); BOTKUS, Breido, 30175 Hannover (DE)
(74) Vertreter: Maikowski & Ninnemann Patentanwälte Partnerschaft mbB

(56) Entgegenhaltungen:
- EP-A1- 0 403 322
- EP-A2- 1 970 574
- WO-A1-2013/160607
- WO-A2-2009/127196
- DE-A1-102012 011 848
- DE-A1-102012 222 344
- DE-A1-102013 213 633
- US-A1- 2013 000 084
- US-A1- 2013 327 912

## Beschreibung

Die Erfindung betrifft eine Verschlussvorrichtung nach dem Oberbegriff des Anspruchs 1 und eine Halterung für die Befestigung eines Gegenstands an einem Zwei- oder Dreirad, insbesondere eine Lenkerhalterung, die eine derartige Vorschlussvorrichtung umfasst.

Eine derartige Verschlussvorrichtung dient insbesondere zum Befestigen eines elektronischen Geräts an einem Trägerelement. Beispielsweise kann mittels einer solchen Verschlussvorrichtung ein Mobilgerät, insbesondere ein Smartphone, oder ein sonstiges Kommunikationsgerät, zum Beispiel ein Navigationsgerät oder dergleichen, an einem Trägerelement, beispielsweise an einem Fahrradlenker oder dergleichen, festgelegt werden.

Eine solche Verschlussvorrichtung umfasst ein erstes Verschlussteil, das einen ersten Verbindungsabschnitt aufweist, ein zweites Verschlussteil, das einen zweiten Verbindungsabschnitt aufweist und das in eine Schließrichtung an das erste Verschlussteil ansetzbar ist, und eine Magneteinrichtung, die beim Ansetzen der Verschlussteile aneinander magnetisch anziehend zwischen dem ersten Verschlussteil und dem zweiten Verschlussteil wirkt. An einem der Verbindungsabschnitte ist mindestens ein Gewindegang und an dem anderen der Verbindungsabschnitte mindestens ein Eingriffselement angeordnet, wobei die Verbindungsabschnitte unter Drehung zueinander um die Schließrichtung herum durch ein Auflaufen des mindestens einen Eingriffselements auf den mindestens einen Gewindegang miteinander verschraubbar sind und wobei der Gegenstand an einem der Verschlussteile festlegbar ist und das andere der Verschlussteile an dem Trägerelement zu befestigen ist.

Bei derartigen Verschlussvorrichtungen besteht häufig das Problem, dass zum Verschrauben des ersten Verbindungsabschnitt und des zweiten Verbindungsabschnitts miteinander das erste Verschlussteil als Ganzes relativ zu dem zweiten Verschlussteil als Ganzem um die Schließrichtung verdreht werden muss. Für das Festlegen eines Gegenstands an einem der Verschlussteile in einer definierten oder gewünschten Stellung in Bezug auf ein Trägerelement, an welchem der Gegenstand gehalten werden soll und an welchem das andere der Verschlussteile befestigt ist, kann es aber wünschenswert sein, ein Verdrehen des einen Verschlussteils als Ganzem gegenüber dem anderen Verschlussteil als Ganzem beim Verschrauben der Verbindungsabschnitte miteinander zu verhindern.

Zum Stand der Technik wird auf die Dokumente EP 0 403 322 A1 und WO 2009/127196A2 verwiesen.

Aufgabe der vorliegenden Erfindung ist es daher, eine Verschlussvorrichtung zur Verfügung zu stellen, die in einfacher, günstiger und mechanisch stabiler Weise eine Befestigung eines Gegenstands an einem Trägerelement, beispielsweise an einem Fahrradlenker, in einer definierten oder gewünschten Stellung ermöglicht.

Diese Aufgabe wird durch eine Verschlussvorrichtung mit den Merkmalen des Anspruchs 1 gelöst.

Demnach umfasst das erste Verschlussteil zusätzlich mindestens einen ersten Verdrehsicherungsabschnitt, und das zweite Verschlussteil umfasst zusätzlich mindestens einen zweiten Verdrehsicherungsabschnitt. Dabei sind der mindestens eine erste Verdrehsicherungsabschnitt und der mindestens eine zweite Verdrehsicherungsabschnitt beim Verschrauben der Verbindungsabschnitte drehfest miteinander. Der mindestens eine erste Verdrehsicherungsabschnitt und der mindestens eine zweite Verdrehsicherungsabschnitt stehen zum Herstellen einer drehfesten Verbindung formschlüssig miteinander in Eingriff. Wenigstens einer der Verbindungsabschnitte eines Verschlussteils ist relativ zu dem Verdrehsicherungsabschnitt dieses Verschlussteils drehbar.

Durch die drehfeste Verbindung behalten die Verdrehsicherungsabschnitte sowie alle damit starr verbundenen Teile während des Verschraubens der Verbindungsabschnitte insbesondere bezüglich einer Drehung um die Schließrichtung herum eine gleichbleibende relative Stellung zueinander. Auf diese Weise kann beispielsweise das Befestigen eines elektronischen Gerätes an einem Trägerelement (zum Beispiel ein Fahrradlenker) in einer gewünschten oder vorbestimmten Ausrichtung relativ zu dem Trägerelement erleichtert werden. Das elektronische Gerät kann beispielsweise während des Verschraubens der Verbindungsabschnitte miteinander gleichbleibend in einer Stellung (bezüglich Drehung um die Schließrichtung herum) verbleiben, die es beim Ansetzen der Verschlussteile aneinander einnimmt.

In einer vorteilhaften Ausführungsform sind die Verdrehsicherungsabschnitte zum Verhindern eines Mitdrehens von wenigstens einem weiteren Teil des ersten Verschlussteils und/oder des zweiten Verschlussteils eingerichtet und angeordnet.

So kann zum Beispiel das erste Verschlussteil einen mit dem ersten Verbindungsabschnitt verbundenen ersten Befestigungsabschnitt zum Befestigen des ersten Verschlussteils an einem Trägerelement aufweisen, wobei der erste Befestigungsabschnitt mit dem mindestens einen ersten Verdrehsicherungsabschnitt drehfest bezüglich einer Drehung um die Schließrichtung herum verbunden ist. Beispielsweise kann dabei der erste Befestigungsabschnitt zum Befestigen des ersten Verschlussteils an einem rohrförmigen Trägerelement, insbesondere an einem Fahrradlenker, ausgebildet sein. Es ist selbstverständlich auch denkbar, dass der erste Befestigungsabschnitt zum Befestigen des ersten Verschlussteils an einer anderen Fahrradstange als dem Fahrradlenker oder beispielsweise an einem Motorradlenker ausgebildet ist. Grundsätzlich kann die erfindungsgemäße Verschlussvorrichtung insbesondere für jede Art von Halterung für die Befestigung eines Gegenstands an einem Zwei- oder Dreirad ausgebildet und eingerichtet sein. Dies schließt neben der Verwendung in einer Gerätehalterung an einem Lenker unter anderem die Verwendung für eine Taschenhalterung an einem Fahrrad, Motorrad oder Trike ein.

Weiterhin kann in einer vorteilhaften Ausführungsform das zweite Verschlussteil einen mit dem zweiten Verbindungsabschnitt verbundenen zweiten Befestigungsabschnitt zum Befestigen eines Gegenstands, z.B. eines elektronischen Gerätes oder einer Tasche, an dem zweiten Verschlussteil aufweisen, wobei der zweite Befestigungsabschnitt mit dem mindestens einen zweiten Verdrehsicherungsabschnitt drehfest bezüglich einer Drehung um die Schließrichtung herum verbunden ist. Beispielsweise kann der zweite Befestigungsabschnitt zum Befestigen eines elektronischen Gerätes, wie zum Beispiel eines Mobiltelefons, insbesondere eines Smartphones, oder eines sonstigen Kommunikationsgerätes, zum Beispiel eines Navigationsgerät oder dergleichen, ausgebildet sein.

Der erste Verbindungsabschnitt kann relativ zu dem mindestens einen ersten Verdrehsicherungsabschnitt um die Schließrichtung herum verdrehbar angeordnet sein. Zusätzlich oder alternativ kann der zweite Verbindungsabschnitt relativ zu dem mindestens einen zweiten Verdrehsicherungsabschnitt um die Schließrichtung herum verdrehbar angeordnet sein. Auf diese Weise wird ermöglicht, dass die Verdrehsicherungsabschnitte beim Verschrauben der Verbindungsabschnitte unter Drehung um die Schließrichtung herum drehfest miteinander in Eingriff stehen.

Insbesondere kann an einem zweiten Verschlussteil, welches einen drehfest mit dem zweiten Verdrehsicherungsabschnitt verbundenen Befestigungsabschnitt zum Befestigen eines Gegenstands aufweist, der zweite Verbindungsabschnitt relativ zu dem mindestens einen zweiten Verdrehsicherungsabschnitt um die Schließrichtung herum verdrehbar angeordnet sein. Dies erlaubt ein Festlegen des Gegenstands an dem zweiten Befestigungsabschnitt in einer vorbestimmten oder gewünschten Stellung bezüglich Drehung um die Schließrichtung, unabhängig von dem Verschrauben der Verbindungsabschnitte miteinander.

Insbesondere der zweite Verdrehsicherungsabschnitt des zweiten Verschlussteils und/oder der erste Verdrehsicherungsabschnitt des ersten Verschlussteils können durch ein separates Bauteil ausgebildet sein, das an den zugehörigen Befestigungsabschnitt montiert und hiermit drehfest verbunden ist. Beispielsweise ist für die Fixierung eines Verdrehsicherungsabschnitts und eines Befestigungsabschnitts aneinander eine Bajonettverbindung vorgesehen. In einer Variante bildet für die Montage eines Verschlussteil ein separates, den Verdrehsicherungsabschnitt ausbildendes Bauteil Verschlusshaken aus, die beim Ansetzen an den Befestigungsabschnitt in zugeordnete Bajonettöffnung des Befestigungsabschnitts eingreifen und durch Drehung des Bauteils relativ zu dem Befestigungsabschnitt mit diesem verrasten. Für die Verrastung mit dem Befestigungsabschnitt bildet dieser z.B. an seinen Bajonettöffnungen jeweils teilweise elastische Rastlaschen aus, die nach dem Drehen des Bauteils einen durch die zugehörige Bajonettöffnung hindurchgreifenden Verschlusshaken hintergreifen und in der Bajonettöffnung formschlüssig sichern.

Gemäß einer Ausführungsform weist der mindestens eine erste Verdrehsicherungsabschnitt und/oder der mindestens eine zweite Verdrehsicherungsabschnitt eine hohlzylindrische Grundform auf, die sich axial entlang der Schließrichtung erstreckt. Durch ihre hohlzylindrische Grundform können die Verdrehsicherungsabschnitte eine große mechanische Stabilität aufweisen und zugleich vergleichsweise kostengünstig hergestellt werden.

Es liegt auch im Rahmen der Erfindung, dass die Verdrehsicherungsabschnitte derart ausgebildet sind, dass beim Ansetzen der Verschlussteile aneinander der mindestens eine erste Verdrehsicherungsabschnitt den mindestens einen zweiten Verdrehsicherungsabschnitt oder der mindestens eine zweite Verdrehsicherungsabschnitt den mindestens einen ersten Verdrehsicherungsabschnitt mindestens abschnittsweise rings um die Schließrichtung herum umgibt. Durch eine solche Anordnung kann ein Formschluss der Verdrehsicherungsabschnitte miteinander und darüber der Verschlussteile insgesamt bezüglich einer radialen Bewegung zu der Schließrichtung hergestellt werden. Dies kann in vorteilhafter Weise zur mechanischen Stabilität der Verschlussvorrichtung im angesetzten und insbesondere verschraubten Zustand beitragen.

Bevorzugt stehen der mindestens eine erste Verdrehsicherungsabschnitt und der mindestens eine zweite Verdrehsicherungsabschnitt beim Verschrauben der Verbindungsabschnitte zum Herstellen einer drehfesten Verbindung formschlüssig miteinander in Eingriff.

In einer Weiterbildung weist der mindestens eine erste Verdrehsicherungsabschnitt oder der mindestens eine zweite Verdrehsicherungsabschnitt mindestens ein entlang der Schließrichtung längserstrecktes Formschlusselement auf. Ferner weist ein Verdrehsicherungsabschnitt des anderen Verschlussteils mindestens eine entlang der Schließrichtung längserstreckte Ausnehmung zur Aufnahme des mindestens einen längserstreckten Formschlusselements aufweist. Auf diese Weise kann ein mechanisch stabiler und zuverlässiger drehfester Formschluss der Verdrehsicherungsabschnitte miteinander erreicht werden. Über das Eingreifen des Formschlusselementes in eine Ausnehmung oder das Eingreifen mehrerer Formschlusselemente in mehrere Ausnehmungen und eine damit verbundene Arretierung des jeweiligen Formschlusselements quer zur Schließrichtung (und einer damit zusammenfallenden Schraub- oder Drehachse der Verschlussvorrichtung) ist also eine drehfeste Verbindung der Verdrehsicherungsabschnitte hergestellt.

Ein Formschlusselement und/oder eine Ausnehmung können zumindest abschnittsweise konisch zur Schließrichtung geformt sein. In einem Ausführungsbeispiel sind mehrere Formschlusselemente und die zugehörigen Ausnehmungen jeweils konisch und sich in Schließrichtung verjüngend ausgebildet. Die Formschlusselemente sind somit keilförmig ausgebildet und sind nach dem bestimmungsgemäßen Verschrauben der Verbindungsabschnitte vorzugsweise auch kraftschlüssig in der Ausnehmung gehalten. Derart ist nach dem Verschrauben der Verbindungsabschnitte eine zusätzliche kraft- und formschlüssige Bauteilverbindung für die miteinander verbundenen Verschlussteile über die Formschlusselemente und die sie aufnehmenden Ausnehmungen bereitgestellt.

In einer Variante sind mehrere Formschlusselemente und/oder Ausnehmungen vorgesehen. Dies schließt insbesondere eine Variante ein, bei der an einem Verdrehsicherungsabschnitt sowohl mindestens ein Formschlusselement als auch mindestens eine Ausnehmung und an dem anderen Verdrehsicherungsabschnitt des anderen Verschlussteils hiermit korrespondierend mindestens eine Ausnehmung und mindestens ein Formschlusselement vorgesehen sind. Hierunter fallen aber natürlich auch Ausgestaltungen, bei denen an einem Verdrehsicherungsabschnitt eines Verschlussteils ausschließlich Formschlusselemente und an dem anderen Verdrehsicherungsabschnitt des anderen Verschlussteils ausschließlich Ausnehmungen für diese Formschlusselemente vorgesehen sind.

Die Formschlusselemente und/oder Ausnehmungen sind vorzugsweise an dem jeweils zugehörigen Verdrehsicherungsabschnitt entlang einer Umfangslinie um die Schließrichtung zueinander beabstandet. Für eine gleichmäßige Verteilung auftretender Belastungen und eine formschlüssige, drehfeste Verbindung der beiden Verdrehsicherungsabschnitte in mehreren Relativlagen um die Schließrichtung sind hierbei die Formschlusselemente und Ausnehmungen vorzugsweise äquidistant zueinander beabstandet, z.B. sind bei vier Formschlusselementen diese um jeweils 90° zueinander versetzt.

Der erste Verbindungsabschnitt und/oder der zweite Verbindungsabschnitt sind in einer möglichen Ausgestaltung zumindest abschnittsweise konisch zur Schließrichtung geformt. Der erste Verbindungsabschnitt und der zweite Verbindungsabschnitt sind somit nicht zylindrisch zur Schließrichtung ausgebildet, sondern zumindest abschnittsweise konisch, was das Ansetzen der Verbindungsabschnitte aneinander erleichtern kann.

Die Verbindungsabschnitte können hierbei an ihren Gewindegängen oder Eingriffselementen konisch geformt sein oder auch an sonstigen Flächenabschnitten, die beim Ansetzen der Verbindungsabschnitte aneinander miteinander in Anlage gelangen.

Insbesondere können Gewindegänge eines oder beider Verbindungsabschnitte an einer dem anderen Verbindungsabschnitt des anderen Verschlussteils zugewandten Seite unter einem Winkel zur Schließrichtung geneigt und somit konisch ausgebildet sein.

In einer Ausführungsform kann der mindestens eine Gewindegang eine derartige Steigung aufweisen, dass beim Ansetzen der Verschlussteile aneinander aufgrund der magnetisch anziehenden Wirkung der Magneteinrichtung das mindestens eine Eingriffselement und der mindestens eine Gewindegang aufeinander auflaufen und die Verbindungsabschnitte selbsttätig um die Schließrichtung herum zueinander verdreht werden. Dabei können die Verbindungsabschnitte selbsttätig miteinander verschraubt werden.

Der Eingriff des Gewindegangs an dem Verbindungsabschnitt des einen Verschlussteils und des Eingriffselements an dem anderen Verschlussteil ist in dieser Ausführungsform nicht selbsthemmend. Durch Ansetzen der Verschlussteile in die Schließrichtung aneinander gelangt der Gewindegang des einen Verbindungsabschnitt selbsttätig in Eingriff mit dem Eingriffselement des anderen Verbindungsabschnitt, sodass die Verbindungsabschnitte und darüber die Verschlussteile selbsttätig, bewirkt durch die magnetische Anziehungskraft zwischen den Verschlussteilen, unter Drehung zueinander um die Schließrichtung herum miteinander verschraubt werden.

Es ergibt sich hierbei ein sehr einfacher Ansetzvorgang, der von einem Nutzer lediglich ein (ungefähres) Ansetzen der Verschlussteile aneinander erfordert. Das mechanische Ineingriffbringen durch Verschrauben der Verschlussteile miteinander erfolgt unter Wirkung der magnetischen Anziehungskraft der Magneteinrichtung selbsttätig, wobei hierzu die Magneteinrichtung entsprechend dimensioniert ist.

Beispielsweise weist jedes Verschlussteil ein Magnetelement in Form eines Permanentmagneten auf, die bei Ansetzen der Verschlussteile aneinander mit ungleichnamigen Polen aufeinander zu weisen, sodass eine magnetische Anziehungskraft zwischen den Magnetelementen besteht.

In einer Variante ist auch an dem anderen der Verbindungsabschnitte mindestens ein Gewindegang angeordnet, wobei der mindestens eine Gewindegang das mindestens eine Eingriffselement umfasst, insbesondere ausbildet. Beispielsweise kann das mindestens eine Eingriffselement ein Vorsprung sein, der den mindestens einen Gewindegang wenigstens abschnittsweise definiert.

Gemäß einer weiteren Variante weisen die Verbindungsabschnitte jeweils mindestens eine Gleitfläche und mindestens einen Sperrbereich derart auf, dass die Verbindungsabschnitte entlang ihrer Gleitflächen unter Drehung um die Schließrichtung herum verschraubbar sind, wenn die beiden aneinander angesetzten Verschlussteile durch eine Kraft in Schließrichtung aufeinandergedrückt werden, und in einem verbundenen Zustand, in welchem die Verbindungsabschnitte miteinander verschraubt sind, eine Drehung der beiden Verbindungsabschnitte zueinander um die Schließrichtung durch die aneinander liegenden Sperrbereiche gesperrt ist, wenn einer der Verbindungsabschnitte mit einer Zugkraft belastet wird, die von dem anderen Verschlussteil weg weist. Hierüber ist sichergestellt, dass die Verschlussvorrichtung im Belastungsfall nicht unerwünscht öffnet, sondern nur durch einen Benutzer bewusst geöffnet werden kann. Beispielsweise können die jeweils mindestens eine Gleitfläche und/oder der jeweils mindestens eine Sperrbereich einen Gewindegang an den Verbindungsabschnitten definieren.

Ein Sperrbereich kann hierbei für eine mechanische Verrastung der beiden Verbindungsabschnitte miteinander ausgebildet sein, über die einem unerwünschten oder unbeabsichtigten Öffnen der Verschlussvorrichtung entgegengewirkt wird. Für eine solche Verrastung bildet der jeweilige Sperrbereich beispielsweise Rastausnehmungen und/oder Rastnasen oder -haken oder eine Rastverzahnung entsprechend der DE 10 2013 213 633 A1 aus, über die ein formschlüssiger sperrender Eingriff der beiden Verbindungsabschnitte bei einer Zugbelastung möglich ist, insbesondere bei einer entgegen der Schließrichtung wirkenden Zugbelastung auf das in Schließrichtung angesetzte zweite Verschlussteil.

Die Sperrbereiche sind in einem Ausführungsbeispiel derart ausgebildet und angeordnet, dass im verbundenen Zustand der Verschlussteile eine geringfügige Verdrehung der beiden Verbindungsabschnitte relativ zueinander gestattet ist, wenn an wenigstens einem Verschlussteile eine entsprechende Zugbelastung angreift, bevor die Sperrbereiche miteinander formschlüssig verrasten. So müssen die Verschlussteile zum Aufschrauben gegeneinander gedrückt werden, um eine Verrastung über die Sperrbereiche zu vermeiden und die Verschlussteile voneinander zu trennen.

In einer hierauf basierenden Weiterbildung sind die beiden Verbindungsabschnitte so ausgebildet, dass sie in einem geschlossenen Zustand der Verschlussvorrichtung spielfrei miteinander verschraubt sind und damit kein Spiel entlang einer zu der Schließrichtung parallelen Verbindungsachse der beiden Verschlussteile aufweisen. Hierfür sind vorzugsweise die Gewinde der Verbindungsabschnitte im verschraubten Zustand spielfrei. Ein Verrasten an den Sperrbereichen, wodurch die Verbindungsabschnitte gegen eine Drehung relativ zueinander bei entlang der Verbindungsachse wirkender Zugbelastung gesperrt sind, ist somit in einer solchen Ausführungsvariante erst nach einer geringfügigen Drehbewegung möglich. Diese Drehbewegung eines der Verbindungsabschnitte in eine Löserichtung wird hierbei dann über die anliegende Zugbelastung verursacht und über die entsprechend gewählte Gewindesteigung zugelassen oder zumindest - bei entsprechend hoher Zugbelastung - ermöglicht.

In einer Ausführungsvariante bildet das Eingriffselement des einen Verbindungsabschnitts oder ein dieses ausbildendes Gewinde eine dem anderen Verbindungsabschnitt zugewandte, abgerundete und/oder bezüglich der Schließrichtung angeschrägte Stirnfläche aus. Alternativ oder ergänzend kann durch einen Gewindesteg, der den mindestens einen Gewindegang des anderen Verbindungsabschnitts berandet, eine abgerundete und/oder bezüglich der Schließrichtung angeschrägte Stirnfläche ausgebildet sein. Über das Vorsehen einer Rundung oder Anschrägung, z.B. mit einer Fase, an der Stirnfläche wird das Risiko reduziert, dass das zweite Verschlussteil in einer ungünstigen Relativlage zu dem ersten Verschlussteil hieran angesetzt wird, in der durch die Stirnfläche eine selbsttätige Verschraubung infolge der Magneteinrichtung blockiert ist. So wird hierüber der jeweilige Gewindeeinlauf optimiert, um nur in einem sehr kleinen, d.h., z.B. bezogen auf den Gesamtumfang des Verbindungsabschnitts nur einen Bruchteil ausmachenden Bereich überhaupt das Risiko zu haben, dass die beiden Verbindungsabschnitte nicht selbsttätig miteinander verschraubt werden und nach dem Ansetzen des zweiten Verschlussteils an das erste Verschlussteil, der drehbare Verbindungsabschnitt zumindest geringfügig manuell gedreht werden muss, bis eine Verschraubung durch die Stirnfläche nicht mehr blockiert ist. Die abgerundete und/oder bezüglich der Schließrichtung angeschrägte Stirnfläche ist bevorzugt derart ausgebildet, dass ein sich quer zur Schließrichtung erstreckender, ebener Totpunktbereich der Stirnfläche, an dem der Verbindungsabschnitt des anderen Verschlussteils anliegen kann und hierüber gegen Verlagerung in die Schließrichtung gesperrt ist, eine Erstreckungslänge entlang einer Umfangslinie um die Schließrichtung von unter 2 mm, insbesondere von unter 1 mm aufweist.

In einer Ausführungsvariante ist der wenigstens eine relativ zu dem zugehörigen Verdrehsicherungsabschnitt drehbare Verbindungsabschnitt gegenüber diesem Verdrehsicherungsabschnitt - vorzugsweise mittels mindestens eines elastischen Elements, z.B. einer Feder - in eine Drehrichtung vorgespannt. Die Vorspannung erfolgt hierbei bevorzugt in diejenige Drehrichtung, in die der Verbindungsabschnitt um die Schließrichtung zum Verschrauben der Verbindungsabschnitte der beiden Verschlussteile gedreht wird. Hierüber kann das Verschrauben der beiden Verbindungsabschnitte beim Ansetzen des zweiten Verschlussteils an das erste Verschlussteil unterstützt werden.

Alternativ oder ergänzend kann eine Arretiereinrichtung vorgesehen sein, mittels der der wenigstens eine relativ zu dem zugehörigen Verdrehsicherungsabschnitt drehbare Verbindungsabschnitt gegenüber diesem Verdrehsicherungsabschnitt in einer vorgegebenen Relativlage arretiert ist, wenn die beiden Verschlussteile voneinander getrennt werden. Die Arretiereinrichtung kann durch eine bei oder nach dem Ansetzen der beiden Verschlussteile aneinander wirksame Magnetkraft - die z.B. von der Magneteinrichtung oder einem zusätzlichen magnetischen Element - betätigbar sein. Eine solche Arretiereinrichtung kann vorteilhaft mit einem vorgespannten Verbindungsabschnitt kombiniert sein, um eine Arretierung des vorgespannten, drehbaren Verbindungsabschnitts zu lösen und den Verbindungsabschnitt zu einer Drehung unter Wirkung einer Vorspannkraft freizugeben. Nach erfolgter Trennung der Verschlussteile voneinander verbleibt somit ein Verbindungsabschnitt in einer vorgespannten Relativlage arretiert, die er bezüglich des Verdrehsicherungsabschnitts einnehmen musste, um die Verbindungsabschnitte voneinander lösen zu können. Infolge einer magnetkraftbedingten Auslösung beim Ansetzen des zweiten Verschlussteils an das erste Verschlussteil wird der - z.B. an dem zweiten Verschlussteil vorgesehene - vorgespannte Verbindungsabschnitt freigegeben und seine Drehbewegung zum Verschrauben der beiden Verbindungsabschnitte und dem Schließen der Verschlussvorrichtung durch die an ihm angreifende Vorspannkraft unterstützt.

In einem weiteren Aspekt betrifft die Erfindung eine Lenkerhalterung, insbesondere eine Fahrradlenkerhalterung oder Motorradlenkerhalterung, wobei die Lenkerhalterung eine erfindungsgemäße Verschlussvorrichtung umfasst.

Weiterhin ist eine Halterung für ein elektronisches Gerät mit einer erfindungsgemäßen Verschlussvorrichtung vorgeschlagen. Das elektronische Gerät kann beispielsweise ein Mobiltelefon, insbesondere ein Smartphone, sein. Das elektronische Gerät kann beispielsweise aber auch ein Navigationsgerät oder ein anderes Kommunikationsgerät oder mobiles Endgerät sein. Die Halterung für das elektronische Gerät kann hierbei selbstverständlich auch als Lenkerhalterung ausgebildet sein. Insbesondere ist eine Smartphone-Halterung mit einer erfindungsgemäßen Verschlussvorrichtung vorgeschlagen.

Ferner ist eine Halterung für die Befestigung eines Gegenstands an einem Zwei- oder Dreirad, insbesondere in Form einer Lenkerhalterung, mit einer erfindungsgemäßen Verschlussvorrichtung vorgeschlagen. Bei dem zu befestigenden Gegenstand kann es sich beispielsweise um ein elektronisches Gerät oder eine Tasche handeln.

Der der Erfindung zugrunde liegende Gedanke soll nachfolgend anhand der in den Figuren dargestellten Ausführungsbeispiele weiter erläutert werden.

Es zeigen:
- Figur 1A: eine perspektivische Ansicht einer Verschlussvorrichtung mit zwei Verschlussteilen, die miteinander in Gewindeeingriff gebracht werden können;
- Figur 1B: eine Seitenansicht der Verschlussvorrichtung; und
- Figur 1C: eine weitere perspektivische Ansicht der Verschlussvorrichtung gemäß Figuren 1A und 1B;
- Figuren 2A bis 2C: Explosionsdarstellungen der Verschlussvorrichtung der Figuren 1A bis 1C;
- Figur 3A: eine Draufsicht auf die Verschlussvorrichtung Figuren 1A bis 2C;
- Figuren 3B bis 3C: Schnittdarstellungen entsprechend den in der Figur 3A gezeigten Schnittlinien;
- Figur 4A: eine Draufsicht auf die Verschlussvorrichtung der Figuren 1A bis 3C;
- Figur 4B: eine Schnittdarstellung entsprechend der in der Figur 4A dargestellten Schnittlinie;
- Figuren 5A bis 5D: teilweise geschnittene Darstellungen der Verschlussvorrichtung der Figuren 1A bis 4B mit vergrößerter Darstellung zweier Sperrbereiche an den Gewinden zweier Verschlussteile der Verschlussvorrichtung, über die einem unerwünschten Lösen der Verschlussteile und damit Öffnen der Verschlussvorrichtung entgegengewirkt werden kann;
- Figur 6A: eine teilweise geschnittene Darstellung mit vergrößerter Darstellung zweier Stirnflächen im Einlaufbereich der beiden Gewinde der Verschlussteile, die bei ungünstigem Kontakt ein selbsttätiges Schließen der Verschlussvorrichtung blockieren könnten;
- Figur 6B: eine weitere Draufsicht auf die Verschlussvorrichtung der Figuren 1A bis 5D mit Darstellung einer Schnittlinie für die Schnittdarstellung der Figur 6A;
- Figuren 7A bis 7C: Explosionsdarstellungen einer weiteren Ausführungsvariante einer erfindungsgemäßen Verschlussvorrichtung ohne Sperrbereiche an den Gewinden der Verschlussteile;
- Figuren 8A bis 8B: in mit den Figuren 4A und 4B übereinstimmenden Ansichten die Verschlussvorrichtung der Figuren 7A bis 7C;
- Figuren 9A bis 9B: in mit den Figuren 6A bis 6B übereinstimmenden Ansichten die Verschlussvorrichtung der Figuren 7A bis 7C und 8A bis 7B.

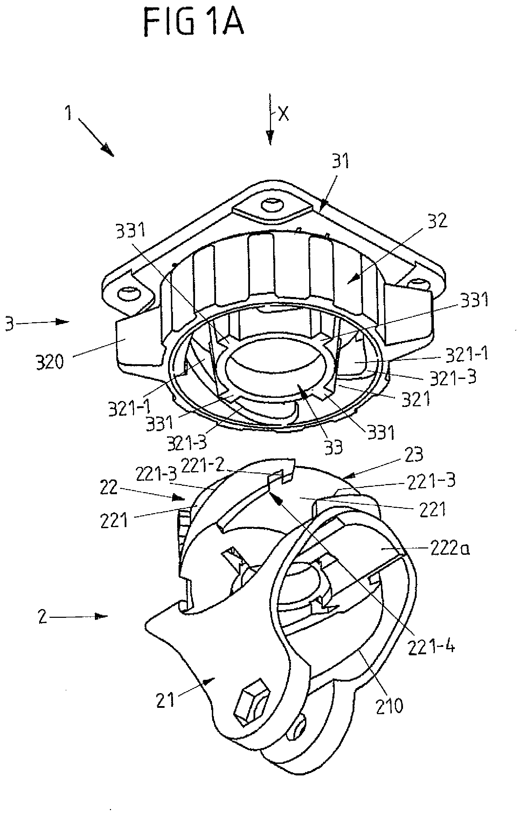

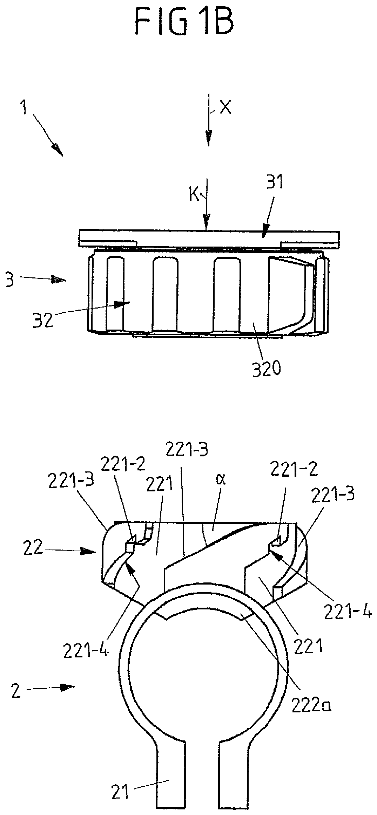

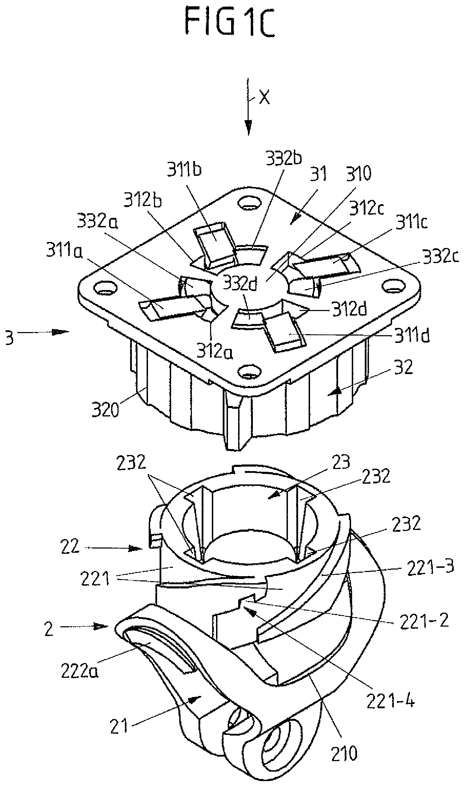

Die Figuren 1A bis 6B zeigen in verschiedenen Ansichten eine Verschlussvorrichtung 1, welche beispielsweise Teil einer Lenkerhalterung, insbesondere eine Fahrradlenkerhalterung zum Befestigen eines elektronischen Geräts, beispielsweise eines Smartphones, sein kann. Die Verschlussvorrichtung hat ein erstes Verschlussteil 2 und ein zweites Verschlussteil 3, die zum Verschließen der Verschlussvorrichtung 1 miteinander in Gewindeeingriff gebracht werden können. Zu diesem Zweck ist das zweite Verschlussteil 3 in eine Schließrichtung X an das erste Verschlussteil 2 ansetzbar und mit diesem verschraubbar.

Das Verschrauben des zweiten Verschlussteils 3 mit dem ersten Verschlussteil 2 erfolgt dabei über einen ersten Verbindungsabschnitt 22, der an dem ersten Verschlussteil 2 vorgesehen ist und einen zweiten Verbindungsabschnitt 32, der an dem zweiten Verschlussteil 3 vorgesehen ist. Beide Verbindungsabschnitte 22, 32 weisen in dem gezeigten Ausführungsbeispiel eine hohlzylindrische Grundform auf, die sich axial entlang der Schließrichtung X erstreckt. Dabei weist der zweite Verbindungsabschnitt 32 im Vergleich zum ersten Verbindungsabschnitt 22 einen größeren Radius bezüglich der Schließrichtung X auf, so dass beim bestimmungsgemäßen Ansetzen des zweiten Verschlussteils 3 an das erste Verschlussteil 2 der zweite Verbindungsabschnitt 32 den ersten Verbindungsabschnitt 22 zumindest abschnittsweise rings um die Schließrichtung X herum umgibt. Der zweite Verbindungsabschnitt 32 definiert ferner einen Griffbereich 320, an dem ein Nutzer mit wenigstens zwei Fingern bequem angreifen kann, um den zweiten Verbindungsabschnitt zum Öffnen der Verschlussvorrichtung 1 aufzudrehen.

An einer äußeren Mantelfläche des ersten Verbindungsabschnitts 22 sind erste Gewindegänge 221 ausgebildet. Komplementär hierzu sind an einer inneren Mantelfläche des zweiten Verbindungsabschnitt 32 zweite Gewindegänge 321 derart ausgebildet, dass die Verbindungsabschnitte 22, 32 unter Drehung zueinander um die Schließrichtung X herum durch ein Auflaufen der zweiten Gewindegänge 321 auf die ersten Gewindegänge 221 miteinander verschraubbar sind.

Im gezeigten Ausführungsbeispiel bilden somit Vorsprünge, die an der inneren Mantelfläche des zweiten Verbindungsabschnitts 32 ausgebildet ist und die zweiten Gewindegänge 321 definieren, Eingriffselemente 321-1, welche zum Verschrauben der Verbindungsabschnitte 22, 32 miteinander auf den ersten Gewindegängen 221 auflaufen. Es sind aber auch andere Varianten denkbar, bei denen mindestens ein Eingriffselement 321-1 auf eine andere Weise an dem zweiten Verbindungsabschnitt 32 ausgebildet ist. Beispielsweise kann ein Eingriffselement 321-1 in Form von mindestens einem an der inneren Mantelfläche des zweiten Verbindungsabschnitts 32 ausgebildeten Vorsprung vorgesehen sein, wobei sich der mindestens eine Vorsprung nur abschnittsweise entlang eines Umfangs der inneren Mantelfläche erstreckt.

Alternativ zu der in Fig. 1A bis 6B dargestellten hohlzylindrischen Ausformung der Verbindungsabschnitte 22, 23 und der daran ausgebildeten Gewindegänge 221, 321 sind Ausführungsformen denkbar, bei welchen wenigstens einer der Verbindungsabschnitte 22, 23 und/oder der Gewindegänge 221, 321 zumindest abschnittsweise konisch zur Schließrichtung X geformt sind. Dies kann das Ansetzen der Verschlussteile 2, 3 aneinander erleichtern.

An jedem der Verschlussteile 2, 3 ist erfindungsgemäß zusätzlich jeweils mindestens ein Verdrehsicherungsabschnitt 23, 33 vorgesehen, wobei die Verdrehsicherungsabschnitte 23, 33 derart ausgebildet und angeordnet sind, dass beim Verschrauben der Verbindungsabschnitte 22, 32 miteinander der erste Verdrehsicherungsabschnitt 23 drehfest bezüglich einer Drehung um die Schließrichtung X herum mit dem zweiten Verdrehsicherungsabschnitt 33 in Eingriff steht.

Dadurch sind der erste Verdrehsicherungsabschnitt 23 und der mindestens eine zweite Verdrehsicherungsabschnitt 33 beim Verschrauben der Verbindungsabschnitte 22, 32 drehfest miteinander verbunden

Der zweite Verdrehsicherungsabschnitt 33 an dem zweiten Verschlussteil 3 weist eine hohlzylindrische Grundform auf, die sich axial entlang der Schließrichtung X erstreckt, wobei ein Radius der hohlzylindrischen Grundform des zweiten Verdrehsicherungsabschnitts 33 kleiner ist als ein Radius der hohlzylindrische Grundform des zweiten Verbindungsabschnitt 32. Der zweite Verdrehsicherungsabschnitt 33 ist an dem zweiten Verschlussteil 3 koaxial zu dem zweiten Verbindungsabschnitt 32 angeordnet und wird von diesem teilweise umgeben.

Dabei ist der zweite Verbindungsabschnitt 32 an dem zweiten Verschlussteil 3 relativ zu dem zweiten Verdrehsicherungsabschnitt 33 um die Schließrichtung X herum verdrehbar angeordnet. Beispielsweise kann der zweite Verbindungsabschnitt 32 derart an einer Unterseite eines im Wesentlichen flach erstreckten zweiten Befestigungsabschnitts 31, welcher zum Befestigen eines elektronischen Geräts an den zweiten Verschlussteil 3 ausgebildet ist, gelagert sein, dass eine Drehung des zweiten Verbindungsabschnitt 32 relativ zu dem Verdrehsicherungsabschnitt 33 um die Schließrichtung X herum möglich ist. Vorliegend ist der zweiter Verbindungsabschnitt 32 über den zweiten Verdrehsicherungsabschnitt 33 und insbesondere einen hieran ausgebildeten Befestigungskragen 333 formschlüssig mit dem Befestigungsabschnitt 31 verbunden und an dem Befestigungsabschnitt 31 drehbar gehalten. Dabei ist der zweite Verdrehsicherungsabschnitt 33 selbst unbeweglich an dem Befestigungsabschnitt 31 fixiert und drehfest mit dem zweiten Befestigungsabschnitt 31 verbunden. Somit ist auch ein elektronisches Gerät, beispielsweise ein Smartphone, welches mit dem zweiten Befestigungsabschnitt 31 starr verbunden werden kann, mit dem zweiten Verdrehsicherungsabschnitt 33 drehfest bezüglich einer Drehung um die Schließrichtung X herum verbunden.

An einer äußeren Mantelfläche des zweiten Verdrehsicherungsabschnitt 33 sind jeweils um 90° zueinander versetzt vier entlang der Schließrichtung X längserstreckte Formschlusselemente 331 angeordnet. Hierzu komplementär sind an einer inneren Mantelfläche des ersten Verbindungsabschnitt 22, welche den zweiten Verdrehsicherungsabschnitt 23 bildet, vier jeweils um 90° zueinander versetzte, entlang der Schließrichtung X längserstreckte Ausnehmungen 232 zur Aufnahme der Formschlusselemente 331 ausgebildet. Beim bestimmungsgemäßen Ansetzen der Verschlussteile 2, 3 aneinander werden die Formschlusselemente 331 in die Aufnahmen 232 eingeführt. Dabei greifen die Formschlusselemente 331 in die Ausnehmungen 232 ein, sodass bezüglich einer Drehung um die Schließrichtung X ein drehfester Formschluss zwischen den Verdrehsicherungsabschnitten 23, 33 besteht. Beim anschließenden Verschrauben der Verbindungsabschnitte 22, 32 miteinander umschließt der zweite Verdrehsicherungsabschnitt 33 den ersten Verdrehsicherungsabschnitt 23 rings um die Schließlichtung X herum.

Das erste Verschlussteil 2 weist einen mit dem ersten Verbindungsabschnitt 22 verbundenen ersten Befestigungsabschnitt 21 zum Befestigen des ersten Verschlussteils 2 an einem Trägerelement auf. In dem dargestellten Ausführungsbeispiel ist der erste Befestigungsabschnitt 21 als Schelle nach Art einer an sich bekannten Fahrradlenkerbefestigung zum Befestigen des ersten Verschlussteils 2 an einem rohrförmigen Trägerelement, insbesondere an einem Fahrradlenker oder Motorradlenker, ausgebildet. Dabei ist der erste Befestigungsabschnitt 21 über den ersten Verbindungsabschnitt 22 drehfest bezüglich einer Drehung um die Schließrichtung X herum mit dem ersten Verdrehsicherungsabschnitt 23 verbunden. Durch die drehfeste Verbindung miteinander behalten die Verdrehsicherungsabschnitte 23, 33 und die hiermit drehfest verbundenen Befestigungsabschnitte 21, 31 sowie alle damit starr verbundenen Teile während des Verschrauben der Verbindungsabschnitte 22, 32 miteinander bezüglich der Drehung um die Schließrichtung X herum eine gleichbleibende Stellung zueinander. Auf diese Weise kann beispielsweise das Befestigen eines Smartphones an einem Fahrradlenker in einer an eine Blickrichtung eines Fahrradfahrers angepasste Ausrichtung relativ zu dem Fahrradlenker erleichtert werden.

An der Verschlussvorrichtung 1 ist ferner eine Magneteinrichtung 24, 34 vorgesehen, die beim Ansetzen der Verschlussteile 2, 3 aneinander magnetisch anziehend zwischen dem ersten Verschlussteil 2 und dem zweiten Verschlussteil 3 wirkt. Hierzu weist jedes Verschlussteil 2, 3 ein Magnetelement 24, 34 in Form eines Permanentmagneten auf, die bei Ansetzen der Verschlussteile 2, 3 aneinander mit ungleichnamigen Polen aufeinander zuweisen, sodass eine magnetische Anziehungskraft in die Schließrichtung X zwischen den Magnetelementen 24, 34 besteht.

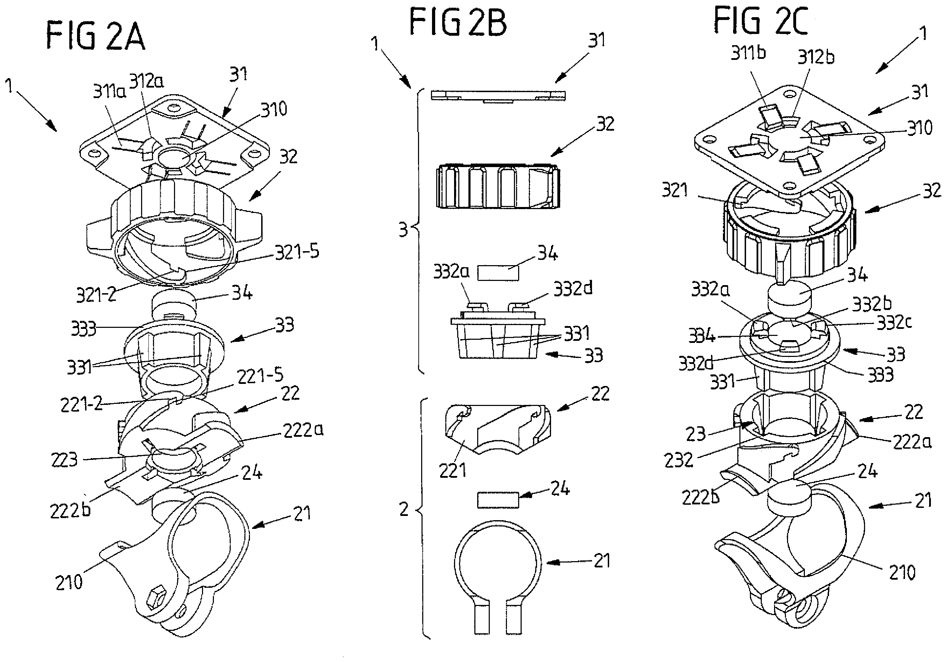

Wie in Figur 2 gezeigt, kann ein erstes Magnetelement 24 beispielsweise in einem unteren Bereich des ersten Verbindungsabschnitts 22 angeordnet sein. Beispielsweise können auch mehrere erste Magnetelemente 24 in einem unteren Bereich des ersten Verbindungsabschnitts 22 symmetrisch bezüglich einer Achse der hohlzylindrischen Grundform des ersten Verbindungsabschnitts 22 angeordnet sein. An dem zweiten Verschlussteil 3 kann beispielsweise ein zweites Magnetelement 34 mittig in den ersten Befestigungsabschnitt 31 eingelassen sein, derart, dass beim bestimmungsgemäßen Ansetzen des zweiten Verschlussteils 3 an das erste Verschlussteil 2 eine resultierende magnetische Anziehungskraft zwischen den ersten Magnetelementen 24 und dem zweiten Magnetelement 34 in die Schließrichtung X wirkt. In einer Variante können auch mehrere zweite Magnetelemente 34 in einem unteren Bereich des zweiten Verdrehsicherungsabschnitts 33 angeordnet sein. Beispielsweise können vier zweite Magnetelemente 34 jeweils in einem unteren Bereich der vier Formschlusselemente 331 angeordnet sein. Die Magnetelemente 24, 34 können zum Beispiel in den Verschlussteilen 2, 3 vergossen sein.

Die Gewindegänge 221, 321 der Verbindungsabschnitte 22, 32 der beiden Verschlussteile 2, 3 weisen in dem dargestellten Ausführungsbeispiel eine derartige Steigung α auf, dass beim Ansetzen der Verschlussteile 2, 3 aneinander aufgrund der magnetisch anziehenden Wirkung der Magneteinrichtung 24, 34 die zweiten Gewindegänge 321 einerseits und die ersten Gewindegänge 221 andererseits aufeinander auflaufen. Hierdurch wird der zweite Verbindungsabschnitt 32 bei arretiertem ersten Verschlussteil 2 selbsttätig um die Schließrichtung X herum relativ zu dem formschlüssig miteinander verbundenen ersten und zweiten Verdrehsicherungsabschnitten 23, 33 gedreht. In Figur 2 ist ein entsprechender Steigungswinkel α des ersten Gewindegangs 221 eingezeichnet. Der Steigungswinkel α, den eine erste Gleitfläche 221-3 zum gleitenden Auflaufen eines Eingriffselements 321-1 des zweiten Verbindungsabschnitts 32 mit dem Lot auf die Schließrichtung X einschließt, kann beispielsweise wenigstens 10°, wenigstens 15°, wenigstens 20°, oder sogar mehr als 30° betragen, um das selbsttätige Auflaufen aufeinander und Verdrehen miteinander der Verbindungselemente 22, 32 zu ermöglichen.

Der Eingriff der Gewindegänge 221, 321 ineinander ist in dieser Ausführungsform nicht selbsthemmend. Durch Ansetzen der Verschlussteile 2, 3 in die Schließrichtung X aneinander gelangt der zweite Gewindegang 321 selbsttätig in Eingriff mit dem ersten Gewindegang 221, sodass die Verbindungsabschnitte 22, 32 und darüber die Verschlussteile 2, 3 selbsttätig, bewirkt durch die magnetische Anziehungskraft zwischen den Verschlussteilen 2, 3, unter relativer Drehung zueinander um die Schließrichtung X herum miteinander verschraubt werden. Dabei ergibt sich ein sehr einfacher Ansetzvorgang der von einem Nutzer lediglich ein (ungefähres) Ansetzen der Verschlussteile 2, 3 aneinander erfordert. Das mechanische Ineingriffbringen durch Verschrauben der Verschlussteile 2, 3 miteinander erfolgt unter Wirkung der magnetischen Anziehungskraft der Magneteinrichtung 24, 34 selbsttätig. Hierzu ist die Magneteinrichtung 24, 34 entsprechend dimensioniert.

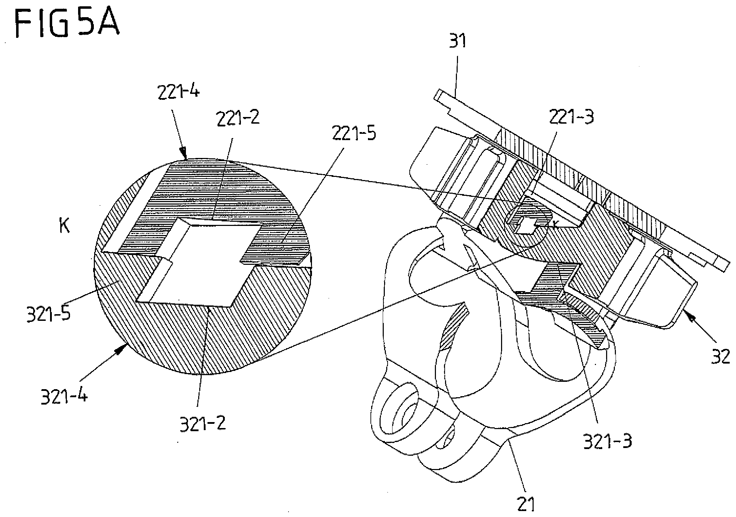

Ferner weist ein Gewinde des ersten Verschlussteils 2, wie im Detail in den Figuren 5A bis 5D dargestellt ist, jeweils neben den Gleitflächen 221-3 auch mindestens einen einer ersten Gleitfläche 221-3 gegenüberliegenden Sperrbereich 221-4 auf. Dabei ist an dem Sperrbereich 221-4 jeweils eine Rastausnehmung 221-2 ausgebildet. An dem Gewinde des zweiten Verschlussteils 3 ist neben den Gleitflächen 321-3 mindestens ein mit dem ersten Sperrbereich 221-4 des ersten Verschlussteils 2 korrespondierender zweiter Sperrbereich 321-4 einer zweiten Gleitfläche 321-3 gegenüberliegend ausgebildet. Ein zweiter Sperrbereich 321-4 weist dabei eine zu der ersten Rastausnehmung 221-2 komplementäre Rastnase 321-5 auf, sodass die Verbindungsabschnitte 22, 32 über die Sperrbereiche 221-4 und 321-4 mechanisch miteinander verrastbar ist. Um eine stabilere Verrastung der Sperrbereiche 221-4 und 321-4 miteinander zu erreichen, weist auch der erste Sperrbereich 221-4 zusätzlich zu der Rastausnehmung 221-2 eine Rastnase 221-5 auf, die für den Eingriff in eine Rastausnehmung 321-2 des anderen Sperrbereichs 321-4 vorgesehen ist.

Die Rastnasen 221-5 und 321-5 sind beispielsweise als Vorsprünge an den zweiten Sperrbereichen 221-4 und 321-4 ausgebildet, welche wechselseitig nach dem Verschrauben der Verbindungsabschnitte 22, 32 mit den Rastausnehmungen 321-2 und 221-2 des jeweils anderen Verbindungsabschnitts 32 oder 22 in Eingriff gebracht werden können. Dabei sind die Verbindungsabschnitte 22, 32 entlang ihrer Gleitflächen 221-3, 323-3 zueinander um die Schließrichtung X herum verdrehbar, wenn die beiden aneinander angesetzten Verschlussteile 2, 3 durch eine Kraft K in Schließrichtung aufeinandergedrückt werden. Die Kraft K kann beispielsweise durch die magnetische Anziehung der Magneteinrichtung 24, 34 beim Ansetzen der Verschlussteile 2, 3 aneinander bereitgestellt werden. Demgegenüber ist eine Drehung der beiden Verbindungsabschnitte 22, 32 zueinander um die Schließrichtung X durch die aneinander liegenden Sperrbereiche 221-4 des ersten Verbindungsabschnitts 22 einerseits und des zweiten Verschlussteils 32 andererseits gesperrt, wenn die Sperrbereiche 221-4 und 321-4 miteinander verrastet sind und die beiden Verbindungsabschnitte 22, 32 auf Zug belastet werden, d.h., insbesondere dass das zweite Verschlussteil 3 entgegen der Schließrichtung X mit einer Zugkraft belastet wird. Beispielsweise kann beim Auflaufen der Gleitflächen 221-3, 321-3 aufeinander ein gewisses Spiel zwischen den dabei einander gegenüberliegenden Sperrbereichen 221-4 des ersten Verbindungsabschnitt 22 einerseits und des zweiten Verbindungsabschnitt 32 andererseits vorgesehen sein, sodass erst in Folge einer Zugbelastung der Verbindungsabschnitte 22, 32 gegeneinander entgegen der Schließrichtung X die einander gegenüberliegenden Sperrbereiche 221-4 und 321-4 in Anlage kommen und insbesondere die an den jeweiligen Sperrbereichen 221-4, 321-4 ausgebildeten Rastausnehmungen 221-2, 321-2 und Rastnasen 321-5, 221-5 wechselseitig miteinander verrasten. Auf diese Weise kann ein unbeabsichtigtes Lösen der Verschraubung der Verbindungsabschnitte 22, 32 durch eine Zugbelastung der Verschlussteile 2, 3 oder der daran angeordneten Teile (z.B. Smartphone und Fahrradlenker) gegeneinander entlang der Schließrichtung X vermieden werden.

Wie insbesondere anhand der Explosionsdarstellungen der Figuren 2A, 2B und 2C veranschaulicht ist, ist jedes der Verschlussteile 2 und 3 der Verschlussvorrichtung 1 mehrteilig ausgeführt, d.h., durch mehrere separat hergestellte und miteinander verbundene Bauteile gebildet. So weist das erste Verschlussteil 2 neben der Schelle, die den Befestigungsabschnitt 21 bildet, einen hieran festgelegten Verbindungskörper auf, der unter anderem den zylindrischen Verbindungsabschnitt 22 ausbildet. Dieser Verbindungskörper ist über quer zur Schließrichtung X radial vorstehende und sich diametral zueinander erstreckende Fixierungsflaschen 222a und 222b an dem ersten Befestigungsabschnitt 21 festgelegt. Die Fixierungsflaschen 222a und 222b hintergreifen hierfür Randabschnitte des ersten Befestigungsabschnitts 21, die eine Lageeröffnung 210 beranden. Diese Lageröffnung 210 ist an einer Oberseite des ersten Befestigungsabschnitts 21 ausgebildet und dient der Aufnahme eines Teils des Verbindungskörpers, sodass sich der erste Verbindungsabschnitt 22 durch diese Lageröffnung 210 hindurch erstrecken kann. An einer unteren Seite der Schelle sind in an sich bekannter Weise elastische Schraublaschen vorgesehen, um die Schelle an einem Lenker fixieren zu können.

Der Verbindungskörper für den ersten Verbindungsabschnitt 22 weist ferner noch einen Lagerabschnitt 223 für das erste Magnetelement 24 auf. Der Lagerabschnitt 223 weist hierfür in dem vorliegenden Ausführungsbeispiel eine zentrale Öffnung auf, in die ein scheibenförmiges erstes Magnetelement 24 eingesetzt werden kann.

Das zweite Verschlussteil 3 umfasst unter anderem ein Basisteil, das den zweiten Verdrehsicherungsabschnitt 33 ausbildet und drehfest mit dem scheibenförmigen zweiten Befestigungsabschnitt 31 verbunden ist. Der zweite Verbindungsabschnitt 32 des zweiten Verschlussteils 3 ist über dieses Basisteil an dem zweiten Befestigungsabschnitt 31 drehbar gehalten. Hierfür weist das Basisteil an seiner oberen Seite mehrere, vorliegend vier, Verschlusshaken 332a, 332b, 332c und 332d sowie einen radial vorspringenden und um die Fließrichtung X umlaufenden Befestigungskragen 333 auf. Die Verschlusshaken 332a bis 332d sind in Bajonettöffnungen 312a, 312b, 312c und 312d des zweiten Befestigungsabschnitts 31 eingesteckt und hierin formschlüssig arretiert. Die Bajonettöffnungen 312a bis 312d sind dabei um ein zentrales Mittelstück 310 des zweiten Befestigungsabschnitts gruppiert und dabei entlang einer Kreislinie um die Schließrichtung X nebeneinander angeordnet.

Nach der bestimmungsgemäßen Fixierung des Basisteils an dem zweiten Befestigungsabschnitt 31 verbleibt zwischen dem Befestigungskragen 333 und einer Unterseite des zweiten Befestigungsabschnitts 31 ein kreisringförmiger Spalt. In diesen kreisringförmigen Spalt greifen radial nach innen vorstehende Stege des hohlzylindrischen zweiten Verbindungsabschnitts 32 ein. sodass diese Stege formschlüssig zwischen dem Befestigungskragen 333 und dem zweiten Befestigungsabschnitt 31 aufgenommen sind. Hierüber ist dann der zweite Verbindungsabschnitt 32 drehbar um die Schließrichtung X und eine hierzu parallele Verbindungsachse an dem zweiten Befestigungsabschnitt 31 und dem den zweiten Verdrehsicherungsabschnitt 33 ausbildenden Basisteil gehalten.

Zur Fixierung des Basisteils an dem zweiten Befestigungsabschnitt sind an dem zweiten Befestigungsabschnitt 31 zusätzlich zu den Bajonettöffnungen 312a bis 312d Rastlaschen 311a, 311b, 311c und 311d vorgesehen, die jeweils einer der Bajonettöffnungen 312a bis 321d zugeordnet sind. Die einzelnen Rastlaschen 311a bis 311d sind jeweils elastisch gelagert. Hierdurch gestatten sie nach dem Einstecken eines Verschlusshakens 332a bis 332d in die jeweilige Bajonettöffnung 312a bis 312d, dass der jeweiligen Verschlusshaken 332a bis 332d an einem radial innen liegenden Ende der jeweiligen Rastlasche 311a bis 311d vorgeführt wird, das Basisteil und der zweite Befestigungsabschnitt 31 relativ zueinander gedreht werden (z.B. bei dem dargestellten Ausführungsbeispiel indem das Basisteil in der Draufsicht im Uhrzeigersinn gedreht wird). Nach einer Drehung des Basisteils und des zweiten Befestigungsabschnitts 31 relativ zueinander, sodass die Verschlusshaken 332a bis 332d innerhalb der jeweils zugeordneten Bajonettöffnung 312a bis 312d in einen Bereich mit kleineren Abmessungen verschoben werden, Verrasten die Verschlusshaken 332a bis 332d mit den Rastlaschen 311a bis 311d und werden von diesen hintergriffen. Derart ist das den 2. Verdrehsicherungsabschnitt 33 ausbildende Basisteil an dem zweiten Befestigungsabschnitt 31 über eine Bajonettverbindung verriegelt und hiermit drehfest verbunden.

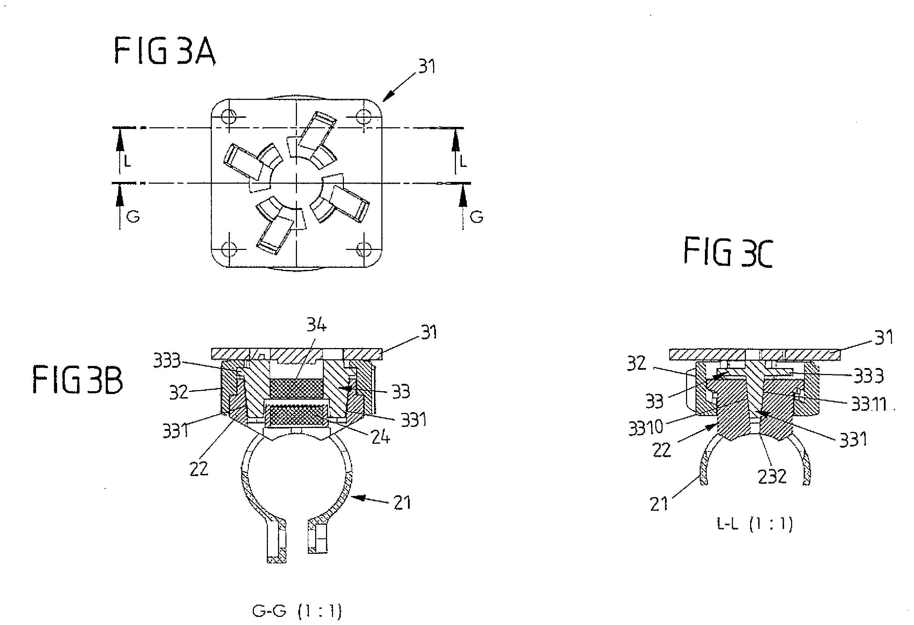

Mit den Figuren 3A, 3B und 3C ist nochmals im Detail die Konusform der stegartig ausgebildeten und radial vorspringenden Formschlusselemente 331 des zweiten Verdrehsicherungsabschnitts 33 sowie die Konusform der damit korrespondierenden längserstreckten Ausnehmungen 232 des ersten Verdrehsicherungsabschnitts 23 veranschaulicht. Die Formschlusselemente 331 und die Ausnehmungen 232 verjüngen sich dabei jeweils in Schließrichtung X, um nach dem Verschrauben der beiden Verbindungsabschnitte 22, 32 nahezu toleranzfrei ineinander zugreifen. Die in der Seitenansicht oder in der Schnittansicht entsprechend der Figur 3C keilförmigen Formschlusselemente 331 weisen hierbei zwei in Umfangsrichtung voneinander abgewandte Anlageflächen 3310 und 3311 auf, die an den Innenwänden der zugehörigen Ausnehmung 232 kraftschlüssig anliegen.

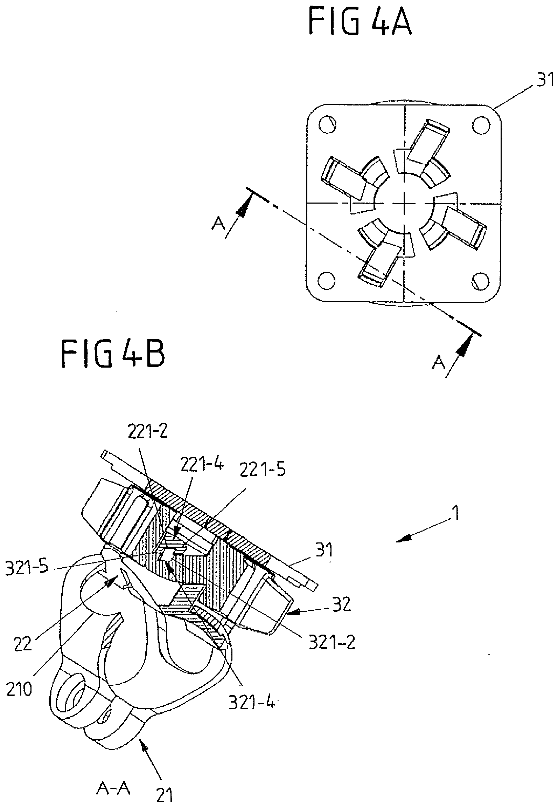

Anhand der Figuren 4A bis 4B und 5A bis 5D ist im Detail das Zusammenspiel der Sperrbereiche 221-4, 321-4 der ersten und zweiten Verbindungsabschnitte 22, 32 veranschaulicht. Über die Sperrbereiche 221-4, 321-4 bleiben beiden Verbindungsabschnitte 22, 32 bei einer Zugbelastung miteinander verriegelt und die Verschlussvorrichtung 1 ist gegen ein unbeabsichtigtes Trennen der beiden Verschlussteile 2, 3 voneinander gesichert, ohne hierbei die leicht gängige Verschraubung der beiden Verbindungsabschnitt der 22, 32 und das selbsttätige Verschließen der Verschlussvorrichtung 1 zu beeinträchtigen.

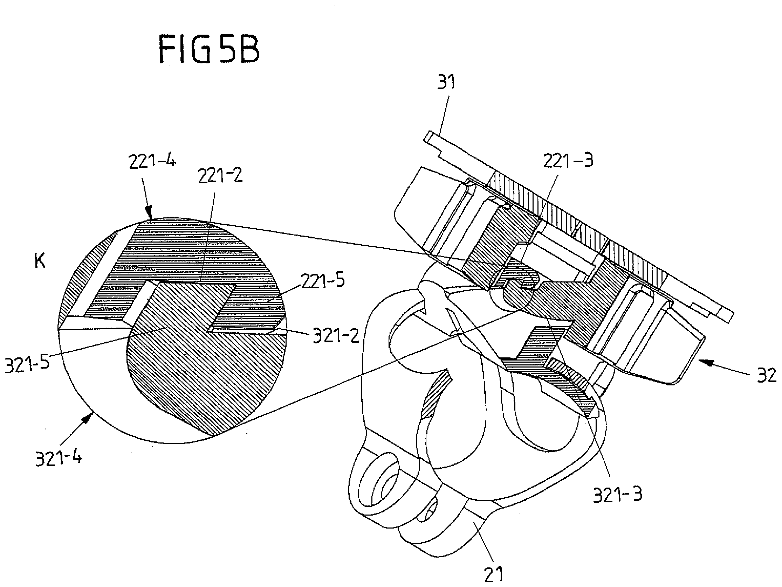

Die Figuren 4B und 5A zeigen dabei einen verbundenen Zustand der beiden Verschlussteile 2, 3, in welchem die jeweiligen Gewinde spielfrei ineinander greifen und die Rastausnehmungen 221-2 und 321-2 der beiden Verbindungsabschnitte 22, 32 einander gegenüberliegen. Die Sperrbereich 221-4, 321-4 greifen hierbei entsprechend der Darstellung der Figur 5B über die Rastnasen 221-5, 321- 5 und Rastausnehmungen 221-2, 321-2 erst wechselseitig ineinander ein, wenn der zweite Verbindungsabschnitt 32 durch eine an dem zweiten Verschlussteil 3 angreifende Zugkraft geringfügig relativ zu dem ersten Verbindungsabschnitt 22 gedreht wurde, und zwar in diejenige Drehrichtung, in die der zweite Verbindungsabschnitt 32 üblicherweise gedreht werden muss, um die beiden Verschlussteile 2, 3 voneinander zu trennen. Wird also das zweite Verschlussteil 3 von dem anderen Verschlussteil 2 weg gezogen, ist über die Verrastung an den Sperrflächen 221-4 und 321-4 und ihre wechselseitig Verrastung kein Trennen der Verschlussteile 2, 3 voneinander möglich.

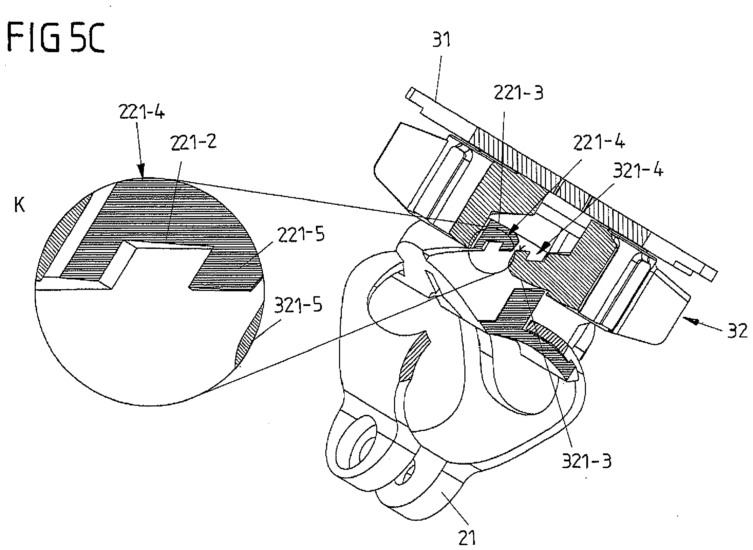

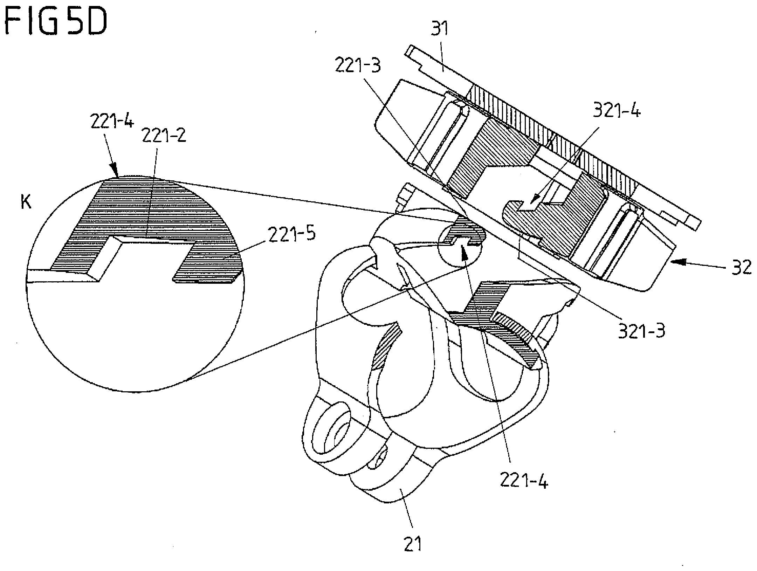

Das Aufschrauben der Verbindungsabschnitte 22, 32 und das vollständige Lösen der Verschlussteile 2, 3 voneinander, wie dies in den Figuren 5C und 5D veranschaulicht ist, ist vielmehr erst möglich, indem die beiden Verschlussteile 2, 3 aufeinander zu gedrückt werden oder zumindest das - vorzugsweise noch mit dem mobilen Gerät verbundene - zweite Verschlussteil 3 in Richtung des ersten Verschlussteils 2 gedrückt wird.

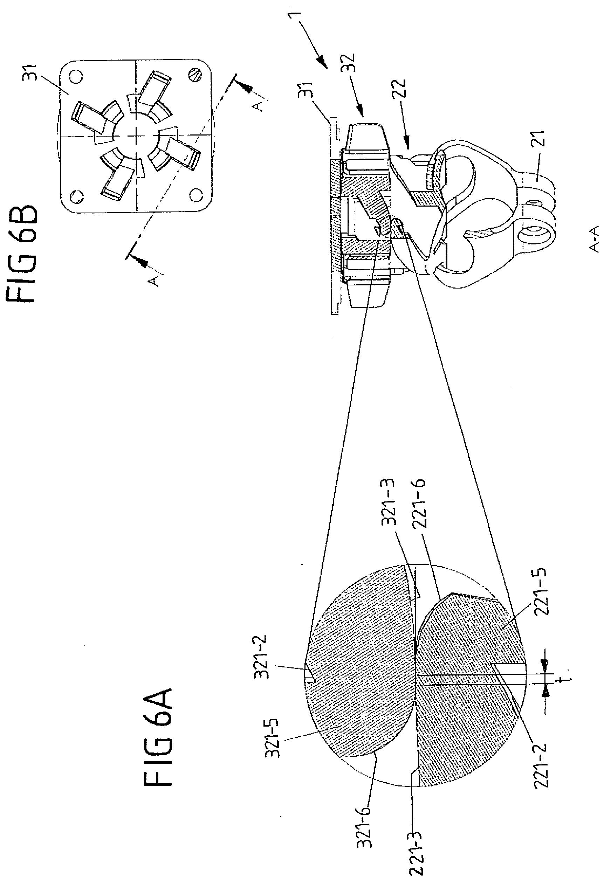

Um beim Ansetzen des zweiten Verschlussteils 3 an das erste Verschlussteil 2 einen Totpunktbereich t, in dem durch aneinander anliegende Stirnflächen der Gewinde der beiden Verbindungsabschnitte 22, 32 ein selbsttätiges Eindrehen des zweiten Verbindungsabschnitts 32 blockiert ist, so gering wie möglich zu halten, sind dem jeweils anderen Verbindungsabschnitt entlang der Verbindungsachse zugewandete Stirnflächen 221-6 und 321-6 an den Gewindeeinläufen entsprechend der Darstellung der Figuren 6A und 6B vorzugsweise abgerundet oder angeschrägt.

Vorliegend ist durch das Vorsehen abgerundeter Stirnflächen 221-6 und 321-6 an den Gewindestege der Gewinden der ersten und zweiten Verbindungsabschnitte 22, 32 ein Totpunktbereich t mit einer Breite von unter 1 mm erreicht. Die Wahrscheinlichkeit, dass beim Ansetzen des zweiten Verschlussteils 3 an das erste Verschlussteil 2 der Verschlussvorrichtung 1 ein selbsttätiges Einschrauben über die einander axial kontaktierenden Gewindestege blockiert ist und ein Gewindesteg des zweiten Verbindungsabschnitts 32 nicht in den ersten Gewindegang 221-2 des ersten Verbindungsabschnitts 22 eingleitet, ist somit auf ein Mindestmaß reduziert.

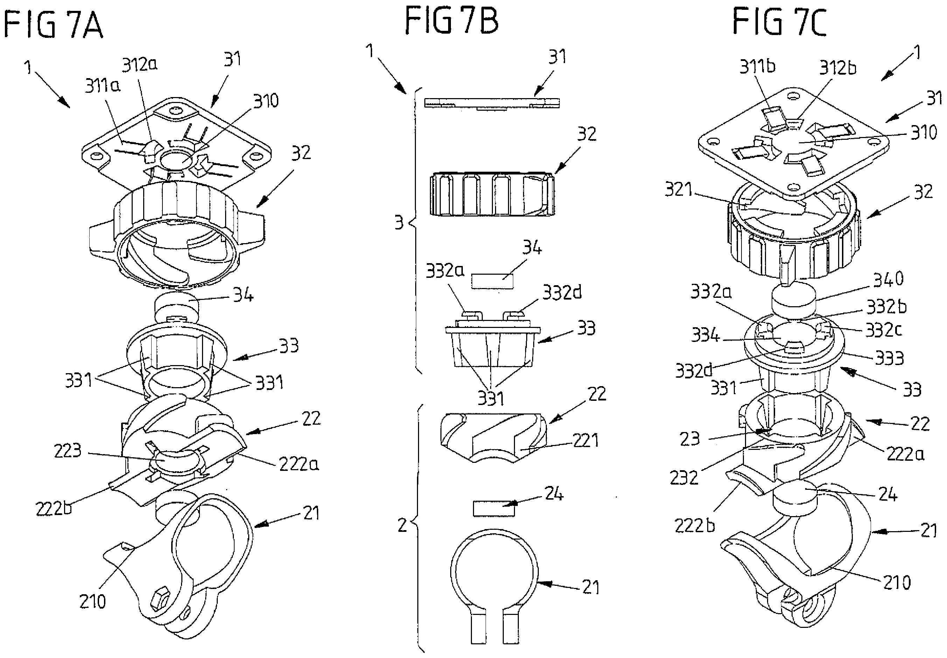

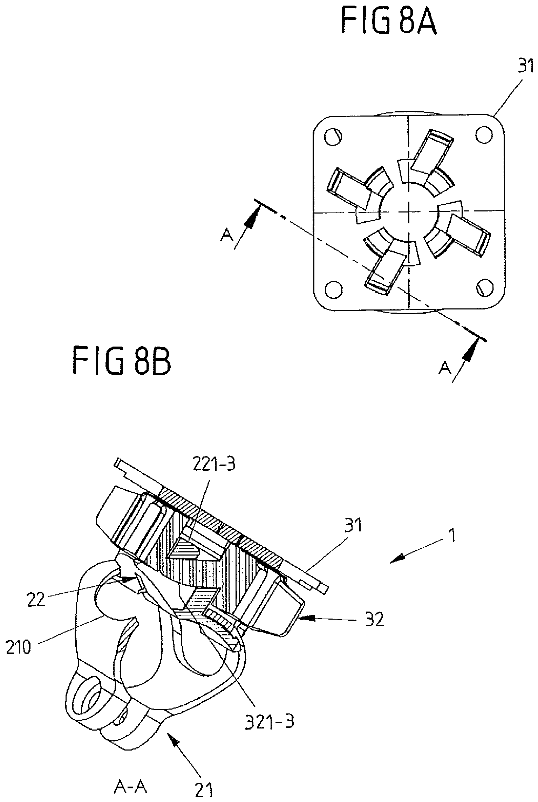

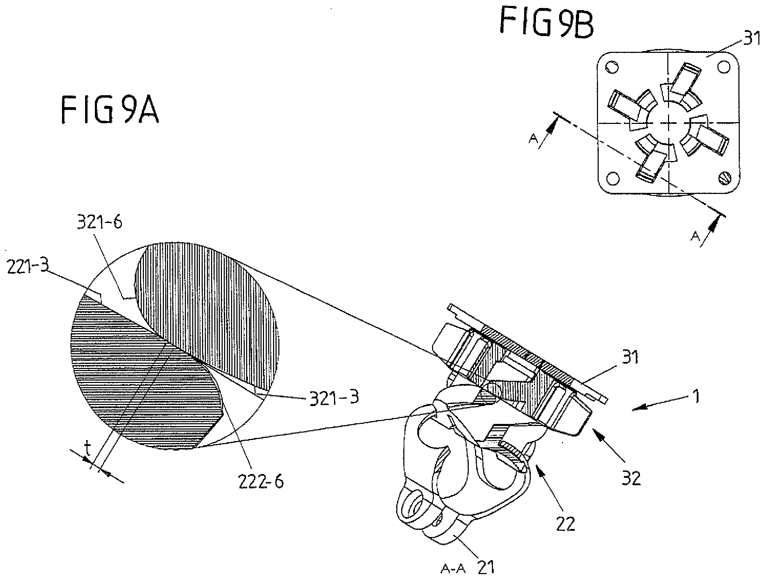

Anhand von Explosionsdarstellungen 7A, 7B, 7C und den mit den Figuren 4A bis 4B und 6A bis 6B übereinstimmenden Ansichten der Figuren 8A bis 8B und 9A bis 9B ist eine zweite Ausführungsvariante einer erfindungsgemäßen Verschlussvorrichtung 1 veranschaulicht. Bei dieser Variante sind mit der Ausführungsvariante der Figuren 1A bis 6b übereinstimmende Elemente mit identischen Bezugszeichen gekennzeichnet. Im Unterschied zu der Verschlussvorrichtung 1 der Figuren 1A bis 6B weist die Verschlussvorrichtung 1 der Figuren 7A bis 9B lediglich keine miteinander verrastbare Sperrbereiche 221-4, 321-4 auf, über die die Verschlussvorrichtung 1 gegen ein unerwünschtes Öffnen gesperrt ist. Im Übrigen stimmen die konstruktiven Details überein.

Grundsätzlich kann der zweite Verbindungsabschnitt 32 bei den dargestellten Ausführungsvarianten relativ zu dem Verdrehsicherungsabschnitt 33 des zweiten Verschlussteils 3 - zum Beispiel mittels mindestens einer Feder - in Schließrichtung vorgespannt sein. Hierdurch kann das Verschrauben der beiden Verbindungsabschnitt 22, 32 beim Ansetzen des zweiten Verschlussteils 3 an das erste Verschlussteil 2 unterstützt werden.

Vorzugsweise ist ergänzend eine Arretiereinrichtung an dem zweiten Verschlussteil 3 vorgesehen, mittels der der drehbare Verbindungsabschnitt 32 gegenüber seinem Verdrehsicherungsabschnitt 33 in einer vorgegebenen Relativlage um die Schließrichtung X arretiert ist, wenn die beiden Verschlussteile 2, 3 voneinander getrennt wurden. Die Arretiereinrichtung kann hierbei magnetisch betätigbar sein, sodass durch eine bei oder nach dem Ansetzen der beiden Verschlussteile 2,3 aneinander wirksame Magnetkraft der Verbindungsabschnitt 32 freigegeben wird und unter der Rückstellkraft eines Federelements in Schließrichtung gedreht wird. Wird der zweite Verbindungsabschnitts 32 des zweiten Verschlussteils 3 zum Öffnen der Verschlussvorrichtung 1 aufgeschraubt, nimmt er hierdurch die Relativlage zu dem Verdrehsicherungsabschnitt 33 ein, in der er über die Arretiereinrichtung automatisch arretiert wird, bis die beiden Verschlussteile 2, 3 wieder aneinander angesetzt werden.

### Bezugszeichenliste

- 1: Verschlussvorrichtung
- 2: Erstes Verschlussteil
- 21: Erster Befestigungsabschnitt
- 210: Lageröffnung
- 22: Erster Verbindungsabschnitt
- 221: Erster Gewindegang
- 221-2: Erste Rastausnehmung
- 221-3: Erste Gleitfläche
- 221-4: Erster Sperrbereich
- 221-5: Rastnase
- 221-6: Abgerundete Stirnfläche
- 222a, 222b: Fixierungslasche
- 223: Lagerabschnitt
- 23: Erster Verdrehsicherungsabschnitt
- 232: Ausnehmung
- 24: Erstes Magnetelement
- 3: Zweites Verschlussteil
- 31: Zweiter Befestigungsabschnitt
- 310: Mittelstück
- 311a-311d: Rastlasche
- 312a - 312d: Bajonettöffnung
- 32: Zweiter Verbindungsabschnitt
- 320: Griffbereich
- 321: Zweiter Gewindegang
- 321-1: Eingriffselement
- 321-2: Rastausnehmung
- 321-3: Zweite Gleitfläche
- 321-4: Zweiter Sperrbereich
- 321-5: Rastnase
- 321-6: Abgerundete Stirnfläche
- 33: Zweiter Verdrehsicherungsabschnitt
- 331: Formschlusselement
- 3310, 3311: Anlagefläche
- 332a - 332d: Verschlusshaken
- 333: Befestigungskragen
- 334: Lagerabschnitt
- 34: Zweites Magnetelement
- K: Kraft
- t: Totpunktbereich
- X: Schließrichtung
- α: Steigungswinkel

## Patentansprüche

1. Verschlussvorrichtung (1) zum Befestigen eines Gegenstands an einem Trägerelement, mit
- einem ersten Verschlussteil (2), das einen ersten Verbindungsabschnitt (22) aufweist,
- einem zweiten Verschlussteil (3), das einen zweiten Verbindungsabschnitt (32) aufweist und das in eine Schließrichtung (X) an das erste Verschlussteil (2) ansetzbar ist, und
- einer Magneteinrichtung (24, 34), die beim Ansetzen der Verschlussteile (2, 3) aneinander magnetisch anziehend zwischen dem ersten Verschlussteil (2) und dem zweiten Verschlussteil (3) wirkt,
wobei an einem der Verbindungsabschnitte (22, 32) mindestens ein Gewindegang (221, 321) und an dem anderen der Verbindungsabschnitte (32, 22) mindestens ein Eingriffselement (321-1) angeordnet ist, und die Verbindungsabschnitte (22, 32) unter Drehung zueinander um die Schließrichtung (X) herum durch ein Auflaufen des mindestens einen Eingriffselements (321-1) auf den mindestens einen Gewindegang (221, 321) miteinander verschraubbar sind, und wobei der Gegenstand an einem der Verschlussteile (2, 3) festlegbar ist und das andere der Verschlussteile (2, 3) an dem Trägerelement zu befestigen ist,
**dadurch gekennzeichnet, dass**
das erste Verschlussteil (2) mindestens einen ersten Verdrehsicherungsabschnitt (23) umfasst und das zweite Verschlussteil (3) mindestens einen zweiten Verdrehsicherungsabschnitt (33) umfasst, wobei der mindestens eine erste Verdrehsicherungsabschnitt (23) und der mindestens eine zweite Verdrehsicherungsabschnitt (33) beim Verschrauben der Verbindungsabschnitte (22, 32) drehfest miteinander verbunden sind und zum Herstellen einer drehfesten Verbindung formschlüssig miteinander in Eingriff stehen, und wenigstens einer der Verbindungsabschnitte (22, 32) eines Verschlussteils (2, 3) relativ zu dem Verdrehsicherungsabschnitt (23, 33) dieses Verschlussteils (2, 3) drehbar ist.

2. Verschlussvorrichtung nach Anspruch 1, **dadurch gekennzeichnet, dass** der erste Verbindungsabschnitt (22) relativ zu dem mindestens einen ersten Verdrehsicherungsabschnitt (23) um die Schließrichtung (X) herum verdrehbar angeordnet ist und/oder dass der zweite Verbindungsabschnitt (32) relativ zu dem mindestens einen zweiten Verdrehsicherungsabschnitt (33) um die Schließrichtung (X) herum verdrehbar angeordnet ist.

3. Verschlussvorrichtung nach Anspruch 1 oder 2, **dadurch gekennzeichnet, dass** mindestens ein Verdrehsicherungsabschnitt (33) eines Verschlussteils (3) mindestens ein entlang der Schließrichtung (X) längserstrecktes Formschlusselement (331) aufweist und ein Verdrehsicherungsabschnitt (23) des anderen Verschlussteils (2) mindestens eine entlang der Schließrichtung (X) längserstreckte Ausnehmung (232) zur Aufnahme des mindestens einen längserstreckten Formschlusselements (331) aufweist.

4. Verschlussvorrichtung nach einem der vorhergehenden Abschnitte, **dadurch gekennzeichnet, dass** der mindestens eine Gewindegang (221) eine derartige Steigung (α) aufweist, dass beim Ansetzen der Verschlussteile (2, 3) aneinander aufgrund der magnetisch anziehenden Wirkung der Magneteinrichtung (24, 34) das mindestens eine Eingriffselement (321-1) und der mindestens eine Gewindegang (221) aufeinander auflaufen und die Verbindungsabschnitte (22, 32) selbsttätig um die Schließrichtung (X) herum zueinander verdreht werden.

5. Verschlussvorrichtung nach einem der vorhergehenden Ansprüche, **dadurch gekennzeichnet, dass** an dem anderen der Verbindungsabschnitte (22, 32) mindestens ein weiterer Gewindegang (321) angeordnet ist, der das mindestens eine Eingriffselement (321-1) ausbildet, wobei die Gewindegänge (221, 321) der Verbindungsabschnitte (22, 32) der beiden Verschlussteile (2, 3) derart ausgebildet und aufeinander abgestimmt sind, dass die Gewinde in einem verbundenen Zustand, in welchem die Verbindungsabschnitte (221, 321) miteinander verschraubt sind, spielfrei ineinander greifen.

6. Verschlussvorrichtung nach einem der vorhergehenden Ansprüche, **dadurch gekennzeichnet, dass** das Eingriffselement (321-1) eine dem anderen Verbindungsabschnitt (32; 22) zugewandte, abgerundete und/oder bezüglich der Schließrichtung (X) angeschrägte Stirnfläche (221-6; 321-6) ausbildet und/oder der mindestens eine Gewindegang (221) durch einen Gewindesteg mit einer dem anderen Verbindungsabschnitt (32; 22) zugewandten, abgerundeten und/oder bezüglich der Schließrichtung (X) angeschrägten Stirnfläche (221-6; 321-6) berandet ist.

7. Verschlussvorrichtung nach Anspruch 6, **dadurch gekennzeichnet, dass** die abgerundete und/oder bezüglich der Schließrichtung (X) angeschrägte Stirnfläche derart ausgebildet ist, dass ein sich quer zur Schließrichtung (X) erstreckender, ebener Totpunktbereich (t) der Stirnfläche (221-6; 321-6), an dem der Verbindungsabschnitt (32; 22) des anderen Verschlussteils (3; 2) anliegen kann und hierüber gegen Verlagerung in die Schließrichtung (X) gesperrt ist, eine Erstreckungslänge entlang einer Umfangslinie um die Schließrichtung (X) von unter 2 mm, insbesondere von unter 1 mm aufweist.

8. Verschlussvorrichtung nach einem der vorhergehenden Ansprüche, **dadurch gekennzeichnet, dass** die Verbindungsabschnitte (221, 321) jeweils mindestens eine Gleitfläche (221-3, 321-3) und mindestens einen Sperrbereich (221-4, 321-4) derart aufweisen, dass
- die Verbindungsabschnitte (22, 23) entlang ihrer Gleitflächen (221-3, 321-3) unter Drehung um die Schließrichtung (X) herum miteinander verschraubbar sind, wenn die beiden aneinander angesetzten Verbindungsabschnitte (22, 23) durch eine Kraft (K) in Schließrichtung (X) aufeinandergedrückt werden, und
- in einem verbundenen Zustand, in welchem die Verbindungsabschnitte (221, 321) miteinander verschraubt sind, eine Drehung der beiden Verbindungsabschnitte (22, 32) zueinander um die Schließrichtung (X) durch die aneinander liegenden Sperrbereiche (221-4, 321-4) des ersten Verbindungsabschnitte (22) und des zweiten Verbindungsabschnitts (32) gesperrt ist, wenn auf einen der Verbindungsabschnitte (22, 32) eine Zugkraft wirkt, die von dem anderen Verbindungsabschnitt (32, 22) weg weist.

9. Verschlussvorrichtung nach einem der vorhergehenden Ansprüche, **dadurch gekennzeichnet, dass** der wenigstens eine relativ zu dem zugehörigen Verdrehsicherungsabschnitt (33) drehbare Verbindungsabschnitt (32) gegenüber diesem Verdrehsicherungsabschnitt (33) in eine Drehrichtung vorgespannt ist, insbesondere in diejenige Drehrichtung, in die der Verbindungsabschnitt (32) um die Schließrichtung (X) zum Verschrauben der Verbindungsabschnitte (22, 32) der beiden Verschlussteile (2, 3) gedreht wird.

10. Verschlussvorrichtung nach einem der vorhergehenden Ansprüche, **dadurch gekennzeichnet, dass** eine Arretiereinrichtung vorgesehen ist, mittels der der wenigstens eine relativ zu dem zugehörigen Verdrehsicherungsabschnitt (33) drehbare Verbindungsabschnitt (32) gegenüber diesem Verdrehsicherungsabschnitt (33) in einer vorgegebenen Relativlage arretiert ist, wenn die beiden Verschlussteile (2, 3) voneinander getrennt werden.

11. Verschlussvorrichtung nach den Ansprüchen 9 und 10, **dadurch gekennzeichnet, dass** die Arretiereinrichtung durch eine bei oder nach dem Ansetzen der beiden Verschlussteile (2, 3) aneinander wirksame Magnetkraft betätigbar ist, um eine Arretierung des vorgespannten, drehbaren Verbindungsabschnitts (32) zu lösen und den Verbindungsabschnitt (32) zu einer Drehung unter Wirkung einer Vorspannkraft freizugeben.

12. Verschlussvorrichtung nach einem der vorhergehenden Ansprüche, **dadurch gekennzeichnet, dass** das erste Verschlussteil (2) einen mit dem ersten Verbindungsabschnitt (22) verbundenen ersten Befestigungsabschnitt (21) zum Befestigen des ersten Verschlussteils (2) an dem Trägerelement aufweist, wobei der erste Befestigungsabschnitt (21) mit dem mindestens einen ersten Verdrehsicherungsabschnitt (23) drehfest verbunden ist.

13. Halterung für die Befestigung eines Gegenstands an einem Zwei- oder Dreirad, insbesondere in Form einer Lenkerhalterung, mit einer Verschlussvorrichtung nach einem der vorhergehenden Ansprüche.

14. Halterung für die Befestigung eines elektronischen Geräts, insbesondere eines Mobilgeräts, an einem Trägerelement, mit einer Verschlussvorrichtung nach einem der vorhergehenden Ansprüche 1 bis 12.

## Claims

1. Closure device (1) for fastening an object to a carrier element, said closure device having
- a first closure part (2) which comprises a first connection portion (22),
- a second closure part (3) which comprises a second connection portion (32) and is mountable onto the first closure part (2) in a closing direction (X) and
- a magnet device (24, 34) which, when the closure parts (2, 3) are placed together, acts in a magnetically attracting manner between the first closure part (2) and the second closure part (3),
wherein at least one thread (221, 321) is arranged on one of the connection portions (22, 32) and at least one engagement element (321-1) is arranged on the other of the connection portions (32, 22), and the connection portions (22, 32) are screw-connectable together by rotation with respect to one another around the closing direction (X) as a result of the at least one engagement element (321-1) running onto the at least one thread (221, 321), and wherein the object can be held on one of the closure parts (2, 3) and the other of the closure parts (2, 3) is to be fastened to the carrier element,
**characterized in that**
the first closure part (2) includes at least one first anti-rotation portion (23) and the second closure part (3) includes at least one second anti-rotation portion (33), wherein the at least one first anti-rotation portion (23) and the at least one second anti-rotation portion (33) are non-rotatably connected together when the connection portions (22, 23) are screw-connected and are in positive locking engagement with one another to produce a non-rotatable connection, and at least one of the connection portions (22, 32) of one closure part (2, 3) is rotatable relative to the anti-rotation portion (23, 33) of said closure part (2, 3).

2. Closure device according to Claim 1, **characterized in that** the first connection portion (22) is arranged so as to be rotatable around the closing direction (X) relative to the at least one first anti-rotation portion (23) and/or **in that** the second connection portion (32) is arranged so as to be rotatable around the closing direction (X) relative to the at least one second anti-rotation portion (33).

3. Closure device according to Claim 1 or 2, **characterized in that** at least one anti-rotation portion (33) of a closure part (3) comprises at least one positive locking element (331) which extends longitudinally along the closing direction (X) and one anti-rotation portion (23) of the other closure part (2) comprises at least one recess (232) which extends longitudinally along the closing direction (X) for receiving the at least one longitudinally extended positive locking element (331).

4. Closure device according to one of the preceding claims, **characterized in that** the at least one thread (221) comprises such a pitch (α) that when the closure parts (2, 3) are placed together, on account of the magnetically attracting action of the magnet device (24, 34), the at least one engagement element (321-1) and the at least one thread (221) run onto one another and the connection portions (22, 32) are automatically rotated with respect to one another around the closing direction (X).

5. Closure device according to one of the preceding claims, **characterized in that** at least one further thread (321), which realizes the at least one engagement element (321-1), is arranged on the other of the connection portions (22, 32), wherein the threads (221, 321) of the connection portions (22, 32) of the two closure parts (2, 3) are realized and matched to one another in such a manner that in a connected state in which the connection portions (221, 321) are screw-connected together, the threads mesh in a play-free manner.

6. Closure device according to one of the preceding claims, **characterized in that** the engagement element (321-1) realizes an end face (221-6; 321-6) which faces the other connection portion (32; 22) and is rounded and/or beveled with reference to the closing direction (X) and/or the at least one thread (221) is bordered by a thread web with an end face (221-6; 321-6) which faces the other connection portion (32; 22) and is rounded and/or beveled with reference to the closing direction (X).

7. Closure device according to Claim 6, **characterized in that** the rounded end face and/or the end face beveled with reference to the closing direction (X) is realized in such a manner that a flat dead center region (t) of the end face (221-6; 321-6), which extends transversely with respect to the closing direction (X) and against which the connecting portion (32; 22) of the other closure part (3; 2) is able to abut and by means of which it is blocked against displacement in the closing direction (X), comprises an extension length of less than 2 mm, in particular of less than 1 mm, along a peripheral line about the closing direction (X).

8. Closure device according to one of the preceding claims, **characterized in that** the connection portions (221, 321) comprise in each case at least one sliding surface (221-3, 321-3) and at least one blocking region (221-4, 321-4) in such a manner that
- the connection portions (22, 23) are screw-connectable together along their sliding surfaces (221-3, 321-3) as a result of rotation around the closing direction (X), when the two connection portions (22, 23) fitted together are pressed together in the closing direction (X) by a force (K) and
- in a connected state in which the connection portions (221, 321) are screwed together, a rotation of the two connection portions (22, 32) with respect to one another about the closing direction (X) is blocked by the blocking regions (221-4, 321-4), located next to one another, of the first connection portion (22) and of the second connection portion (32), when a tensile force, which points away from one of the connection portions (32, 22), acts on the other of the connection portions (22, 32).

9. Closure device according to one of the preceding claims, **characterized in that** the at least one connection portion (32), which is rotatable relative to the associated anti-rotation portion (33), is pre-tensioned in relation to said anti-rotation portion (33) in a direction of rotation, in particular in the direction of rotation into which the connection portion (32) is rotated about the closing direction (X) for screw-connecting the connection portions (22, 32) of the two closure parts (2, 3).

10. Closure device according to one of the preceding claims, **characterized in that** a locking device is provided by means of which the at least one connection portion (32), which is rotatable relative to the associated anti-rotation portion (33), is locked in a predetermined relative position in relation to said anti-rotation portion (33), when the two closure parts (2, 3) are separated from one another.

11. Closure device according to Claims 9 and 10, **characterized in that** the locking device is actuatable by a magnetic force which is effective during or after the two closure parts (2, 3) are placed next to one another in order to disengage a locking of the pre-tensioned, rotatable connection portion (32) and to release the connection portion (32) for rotation under the effect of a pre-tensioning force.

12. Closure device according to one of the preceding claims, **characterized in that** the first closure part (2) comprises a first fastening portion (21) which is connected to the first connection portion (22) for fastening the first closure part (2) to the carrier element, wherein the first fastening portion (21) is non-rotatably connected to the at least one first anti-rotation portion (23).

13. Fastener for fastening an object to a two-wheeler or three-wheeler, in particular in the form of a handlebar fastener, having a closure device according to one of the preceding claims.

14. Fastener for fastening an electronic instrument, in particular a mobile instrument, to a carrier element, having a closure device according to one of the preceding claims 1 to 12.

## Revendications

1. Dispositif de fermeture (1) servant à fixer un objet au niveau d'un élément porteur, avec
- une première partie de fermeture (2), qui présente une première section de liaison (22),
- une seconde partie de fermeture (3), qui présente une seconde section de liaison (32) et qui peut être posée dans une direction de fermeture (X) au niveau de la première partie de fermeture (2), et
- un système magnétique (24, 34), qui agit lors de la pose des parties de fermeture (2, 3) l'une au niveau de l'autre avec une attraction magnétique entre la première partie de fermeture (2) et la seconde partie de fermeture (3),
dans lequel au moins un filetage (221, 321) est disposé au niveau d'une des sections de liaison (22, 32) et au moins un élément de prise (321-1) est disposé au niveau de l'autre des sections de liaison (32, 22), et les sections de liaison (22, 32) peuvent être vissées l'une à l'autre en tournant l'une par rapport à l'autre tout autour de la direction de fermeture (X) par un contact de l'au moins un élément de prise (321-1) sur l'au moins un filetage (221, 321) et dans lequel l'objet peut être fixé au niveau d'une des parties de fermeture (2, 3) et l'autre des parties de fermeture (2, 3) est à fixer au niveau de l'élément porteur,
**caractérisé en ce que**
la première partie de fermeture (2) comprend au moins une première section de sécurité anti-rotation (23) et la seconde partie de fermeture (3) comprend au moins une deuxième section de sécurité anti-rotation (33), dans lequel l'au moins une première section de sécurité anti-rotation (23) et l'au moins une deuxième section de sécurité anti-rotation (33) sont reliées l'une à l'autre de manière solidaire en rotation lors du vissage des sections de liaison (22, 32) et sont en prise les unes avec les autres par complémentarité de forme pour établir une liaison solidaire en rotation, et au moins une des sections de liaison (22, 32) d'une partie de fermeture (2, 3) peut tourner par rapport à la section de sécurité anti-rotation (23, 33) de ladite partie de fermeture (2, 3).

2. Dispositif de fermeture selon la revendication 1, **caractérisé en ce que** la première section de liaison (22) est disposée de manière à pouvoir être tournée par rapport à l'au moins une première section de sécurité anti-rotation (23) tout autour de la direction de fermeture (X), et/ou que la seconde section de liaison (32) est disposée de manière à pouvoir être tournée par rapport à l'au moins une deuxième section de sécurité anti-rotation (33) tout autour de la direction de fermeture (X).

3. Dispositif de fermeture selon la revendication 1 ou 2, **caractérisé en ce que** l'au moins une section de sécurité anti-rotation (33) d'une partie de fermeture (3) présente au moins un élément à complémentarité de forme (331) étiré en longueur le long de la direction de fermeture (X), et une section de sécurité anti-rotation (23) de l'autre partie de fermeture (2) présente au moins un évidement (232) étiré en longueur le long de la direction de fermeture (X), servant à recevoir l'au moins un élément à complémentarité de forme (331) étiré en longueur.

4. Dispositif de fermeture selon l'une quelconque des revendications précédentes, **caractérisé en ce que** l'au moins un filetage (221) présente un pas (α) tel que lors de la pose des parties de fermeture (2, 3) les unes au niveau des autres, du fait de l'action d'attraction magnétique du système magnétique (24, 34), l'au moins un élément de prise (321-1) et l'au moins un filetage (221) viennent en contact l'un sur l'autre, et les sections de liaison (22, 32) sont tournées l'une par rapport à l'autre de manière autonome tout autour de la direction de fermeture (X).

5. Dispositif de fermeture selon l'une quelconque des revendications précédentes, **caractérisé en ce qu'**est disposé au niveau de l'autre des sections de liaison (22, 32) au moins un autre filetage (321), qui réalise l'au moins un élément de prise (321-1), dans lequel les filetages (221, 321) des sections de liaison (22, 32) des deux parties de fermeture (2, 3) sont réalisés de telle manière et adaptés les uns aux autres de telle manière que les filets s'imbriquent les uns dans les autres sans jeu dans un état relié, dans lequel les sections de liaison (221, 321) sont vissées les unes aux autres.

6. Dispositif de fermeture selon l'une quelconque des revendications précédentes, **caractérisé en ce que** l'élément de prise (321-1) réalise une face frontale (221-6 ; 321-6) tournée vers l'autre section de liaison (32 ; 22), arrondie et/ou chanfreinée par rapport à la direction de fermeture (X), et/ou l'au moins un filetage (221) est encadré par une nervure filetée avec une face frontale (221-6 ; 321-6) tournée vers l'autre section de liaison (32 ; 22), arrondie et/ou chanfreinée par rapport à la direction de fermeture (X).

7. Dispositif de fermeture selon la revendication 6, **caractérisé en ce que** la face frontale arrondie et/ou chanfreinée par rapport à la direction de fermeture (X) est réalisée de telle manière qu'une zone de point mort (t) plane, s'étendant de manière transversale par rapport à la direction de fermeture (X), de la face frontale (221-6 ; 321-6), au niveau de laquelle la section de liaison (32 ; 22) de l'autre partie de fermeture (3 ; 2) peut reposer et est bloquée ainsi de manière à empêcher tout déplacement dans la direction de fermeture (X), présente une longueur d'extension le long d'une ligne périphérique autour de la direction de fermeture (X) inférieure à 2 mm, en particulier inférieure à 1 mm.

8. Dispositif de fermeture selon l'une quelconque des revendications précédentes, **caractérisé en ce que** les sections de liaison (221, 321) présentent respectivement au moins une face coulissante (221-3, 321-3) et au moins une zone de blocage (221-4, 321-4) de telle manière que
- les sections de liaison (22, 23) peuvent être vissées entre elles le long de leurs faces coulissantes (221-3, 321-3) en tournant tout autour de la direction de fermeture (X) quand les deux sections de liaison (22, 23) posées l'une au niveau de l'autre sont pressées l'une sur l'autre par une force (K) dans la direction de fermeture (X), et
- dans un état relié, dans lequel les sections de liaison (221, 321) sont vissées entre elles, une rotation des deux sections de liaison (22, 32) l'une par rapport à l'autre autour de la direction de fermeture (X) est bloquée par les zones de blocage (221-4, 321-4) situées les unes au niveau des autres de la première section de liaison (22) et de la seconde section de liaison (32) quand une force de traction, qui pointe de manière à s'éloigner de l'autre section de liaison (32, 22), agit sur une des sections de liaison (22, 32).

9. Dispositif de fermeture selon l'une quelconque des revendications précédentes, **caractérisé en ce que** l'au moins une section de liaison (32) pouvant tourner par rapport à la section de sécurité anti-rotation (33) associée est précontrainte par rapport à ladite section de sécurité anti-rotation (33) dans une direction de rotation, en particulier dans ladite direction de rotation, dans laquelle précisément la section de liaison (32) est tournée autour de la direction de fermeture (X) pour visser les sections de liaison (22, 32) des deux parties de fermeture (2, 3).

10. Dispositif de fermeture selon l'une quelconque des revendications précédentes, **caractérisé en ce qu'**un système d'arrêt est prévu, au moyen duquel l'au moins une section de liaison (32) pouvant tourner par rapport à la section de sécurité anti-rotation (33) associée est arrêtée par rapport à ladite section de sécurité anti-rotation (33) dans une position relative prédéfinie quand les deux parties de fermeture (2, 3) sont séparées l'une de l'autre.

11. Dispositif de fermeture selon les revendications 9 et 10, **caractérisé en ce que** le système d'arrêt peut être actionné par une force magnétique efficace lors de la pose ou après la pose des deux parties de fermeture (2, 3) l'une au niveau de l'autre pour débloquer un arrêt de la section de liaison (32) rotative précontrainte et pour libérer la section de liaison (32) aux fins d'une rotation sous l'effet d'une force de précontrainte.

12. Dispositif de fermeture selon l'une quelconque des revendications précédentes, **caractérisé en ce que** la première partie de fermeture (2) présente une première section de fixation (21), reliée à la première section de liaison (22), servant à fixer la première partie de fermeture (2) au niveau de l'élément porteur, dans lequel la première section de fixation (21) est reliée de manière solidaire en rotation à l'au moins une première section de sécurité anti-rotation (23).

13. Support pour la fixation d'un objet au niveau d'un deux-roues ou d'un tricycle, en particulier sous la forme d'un support de guidon, avec un dispositif de fermeture selon l'une quelconque des revendications précédentes.

14. Support pour la fixation d'un appareil électronique, en particulier d'un appareil mobile, au niveau d'un élément porteur, avec un dispositif de fermeture selon l'une quelconque des revendications 1 à 12.
